# EUROPEAN PATENT SPECIFICATION

(11) **EP 4 675 560 B1**
(45) Date of publication and mention of the grant of the patent: **11.11.2026**
(21) Application number: 25178128.2
(22) Date of filing: 22.05.2025
(51) Int. Cl.: G06T 7/80

(54) **SYSTEM, CALIBRATION APPARATUS AND METHOD FOR DETERMINING A FIRST TRANSFORMATION FOR TWO CAMERAS**
SYSTEM, KALIBRIERVORRICHTUNG UND VERFAHREN ZUR BESTIMMUNG EINER ERSTEN TRANSFORMATION FÜR ZWEI KAMERAS
SYSTÈME, APPAREIL D'ÉTALONNAGE ET PROCÉDÉ DE DÉTERMINATION D'UNE PREMIÈRE TRANSFORMATION POUR DEUX CAMÉRAS

(30) Priority: 02.07.2024 SE 2450746
(43) Date of publication of application: 07.01.2026
(73) Proprietor: Topgolf Sweden AB, 182 33 Danderyd (SE)
(72) Inventor: Nyhed, Lars, 187 54 Täby (SE); Kindberg, Ludvig, 169 59 Solna (SE); Uggla Lingvall, Kristoffer, 169 60 Solna (SE)
(74) Representative: Noréns Patentbyrå AB

(56) References cited:
- EP-A1- 3 547 276
- WO-A1-2021/184218
- CN-A- 113 870 358
- US-A1- 2020 177 867
- US-A1- 2021 243 369
- US-A1- 2022 284 628

## Description

### TECHNICAL FIELD

The embodiments herein relate to calibration of two cameras, having at least partially overlapping fields of view. In particular, a method and a calibration apparatus for for determining a first transformation between a first coordinate system of a first camera and a second coordinate system of a second camera are disclosed. A corresponding computer program and a carrier therefor as well as a related system are also disclosed.

### BACKGROUND

When tracking sports projectiles, such as golf balls, a tracking sensor is used to capture the sports projectile's trajectory as it is moving.

In some scenarios, a broadcast camera for broadcasting a video showing the sport projectile is also used. The tracked trace from the tracking sensor is then rendered in the video to enhance the experience for viewers of the video. In order to do this, the tracked trace must be converted, or transformed, from a coordinate system of the tracking sensor to a coordinate system of the broadcast camera. Thus, there is a need for calibration of the tracking sensor and the broadcast camera.

Related literature discloses a variety of methods for stereo camera calibration, such as the 8-point algorithm: https://en.wikipedia.org/wiki/Eight-point_algorithm. In common for many methods described in the literature is a need for having a relatively large distance between the tracking camera and the broadcast camera and accurately measured positions of numerus reference markers, such as a checkboards, markers or other district points that are visible in both cameras.

Previous arrangements are known from EP 3 547 276 A1 which relates to systems and methods for tracking objects including golf balls and golf players during a golf event and determining statistics for use in a broadcast of the golf event.

US 2021/243369 A1 which relates to systems and methods for placing and calibrating multiple cameras.

US 2022/284628 A1 which relates generally to camera devices, and more particularly, to systems and methods related to multi-camera tracking and to calibration of cameras used in multi-camera tracking.

In the case of broadcast golf, there are no or limited possibilities to add items such as markers, flags, stickers, chessboards, signs or any kind of external reference points, visible to the broadcast camera. Also, it is not possible to establish a wide base between the cameras, given the geometrical limitation of a tee box and the distance to far end of a golf ball trajectory, typically over 200 meters.

When arbitrary placement of the broadcast camera and the tracking sensor occurs at a golf tee box, the coordinate systems of the broadcast camera and the tracking sensor, respectively, have no visible fixed points in the real world. The camera's coordinate-axes have no representation and are of course invisible in the golf course environment. Thus, orientation and translation transformations cannot be directly observed or measured.

### SUMMARY

An object may be to overcome, or at least reduce, one or more of the abovementioned problems and/or disadvantages.

This, and other object, may be achieved by the solutions set forth in the appended independent claims.

According to an aspect, the object is achieved by a method, performed by a calibration apparatus, for determining a first transformation between a first coordinate system of a first camera and a second coordinate system of a second camera. The first and second cameras are spaced away from each other and located above a ground plane. A first field of view of the first camera at least partially overlaps with a second field of view of the second camera. A third camera has a third field of view partially overlapping with the first and second fields of view. The third camera's position and the first camera's position are approximated to be equal. A distant object is present in the first, second and third fields of view and located at an object distance from a location at at least one of the first camera, the second camera, and the third camera, preferably at the first camera. A first marker and a second marker are located at the ground plane and the first and second markers are visible in the second and third fields of view. A second transformation refers to transformation between the second coordinate system of the second camera and a third coordinate system of the third camera. A third transformation refers to transformation between the first coordinate system of the first camera and the third coordinate system of the third camera. The first camera has a first focal length. A first measure indicates a first distance, projected on the ground plane, between the first marker and at least one of the first camera and the third camera. A second measure indicates a second distance, projected on the ground plane, between the second marker and at least one of the first camera and the third camera. A third measure indicates a third distance, projected on the ground plane, between the second camera and at least one of the first camera and the third camera. A fourth measure indicates a fourth distance, projected on the ground plane, between the second camera and the first marker. A fifth measure indicates a fifth distance, projected on the ground plane, between the second camera and the second marker. A sixth measure indicates a sixth distance, projected on the ground plane, between the first marker and the second marker. A seventh measure indicates a seventh distance indicating difference in height between the second camera and at least one of the first and third cameras. A first angle measure indicates a feature angle identified in a first image plane representing the first field of view. A second angle measure indicates the feature angle identified in a second image plane representing the second field of view. A third angle measure indicates the feature angle identified in a third image plane representing the third field of view.

The calibration apparatus estimates a third focal length of the third camera based on
the first measure,
the second measure,
a third position of the first marker in the third field of view,
a fourth position of the second marker in the third field of view,
the sixth measure, and
an image resolution of the third camera.

The calibration apparatus estimates initial orientation components of the third transformation based on
the distant object's position in the first camera,
an image resolution of the first camera,
the first focal length,
the distant object's position in the third camera,
the image resolution of the third camera,
the third focal length,
the object distance,
the first angle measure, and
the third angle measure.

The calibration apparatus estimates initial translation components of the third transformation to be zero.

The calibration apparatus iteratively determines updated orientation components of the third transformation and an updated third focal length under a third constraint that a third reprojection error for at least one reprojection point in the first and third fields of view satisfies a third condition for allowed reprojection error.

The calibration apparatus estimates a second focal length of the second camera based on
the fourth measure,
the fifth measure,
a first position of the first marker in the second field of view,
a second position of the second marker in the second field of view,
the sixth measure, and
an image resolution of the second camera.

The calibration apparatus estimates initial orientation components of the second transformation based on
the distant object's position in the second camera,
an image resolution of the second camera,
the second focal length, and
the distant object's position in the third camera,
an image resolution of the third camera,
the third focal length,
the object distance,
the third measure,
the seventh measure,
the second angle measure, and
the third angle measure.

The calibration apparatus estimates initial second translation components of the second transformation based on
the third measure defining a radius of an imaginary circle centered at camera B,
the second measure defining a radius of an imaginary circle centered at the second marker L,
the fifth measure, and
the seventh measure.

The calibration apparatus iteratively determines updated orientation and translation components for the second transformation and an updated second focal length under a second constraint that a second reprojection error for at least one reprojection point in the second and third fields of view satisfies a second condition for allowed reprojection error. The calibration apparatus estimates initial first orientation components for the first transformation based on the updated second orientation components and the updated third orientation components.

The calibration apparatus estimates initial translation components for the first transformation based on the updated second translation components.

The calibration apparatus iteratively determines at least updated orientation components for the first transformation and a further updated second focal length under a first constraint that a first reprojection error for at least one reprojection point in the first and second fields of view satisfies a first condition for allowed reprojection error.

Thanks to the third camera, it is made possible to relax requirements concerning the first camera. The requirement can be that the first and second markers should be visible is in first camera, e.g. to improve accuracy of a transformation between the first and second camera. Hence, with the introduction of the third camera, which is positioned at the position of the first camera and which is required to capture the first and second markers in its field of view, the requirement that the first camera should capture the first and second markers can be relaxed, or dispensed with. The first camera can therefore more freely capture what is most interesting and/or appealing to a viewer of the video from the first camera. Therefore, user of the first camera is made easier, i.e. less requirements to fulfill for an operator of the first camera, and the viewer experience can therefore be improved. These advantages are achieved thanks to that an accurate first transformation can be determined while using the third camera, and the second and third transformations as described herein.

According to another aspect, the object is achieved by a calibration apparatus configured for determining a first transformation between a first coordinate system of a first camera and a second coordinate system of a second camera. The first and second cameras are spaced away from each other and located above a ground plane. A first field of view of the first camera at least partially overlaps with a second field of view of the second camera. A third camera has a third field of view partially overlapping with the first and second fields of view. The third camera's position and the first camera's position are approximated to be equal. A distant object is present in the first, second and third fields of view and located at an object distance from a location at at least one of the first camera, the second camera, and the third camera, preferably at the first camera. A first marker and a second marker are located at the ground plane and the first and second markers are visible in the second and third fields of view. A second transformation refers to transformation between the second coordinate system of the second camera and a third coordinate system of the third camera. A third transformation refers to transformation between the first coordinate system of the first camera and the third coordinate system of the third camera. The first camera has a first focal length. A first measure indicates a first distance, projected on the ground plane, between the first marker and at least one of the first camera and the third camera. A second measure indicates a second distance, projected on the ground plane, between the second marker and at least one of the first camera and the third camera. A third measure indicates a third distance, projected on the ground plane, between the second camera and at least one of the first camera and the third camera. A fourth measure indicates a fourth distance, projected on the ground plane, between the second camera and the first marker. A fifth measure indicates a fifth distance, projected on the ground plane, between the second camera and the second marker. A sixth measure indicates a sixth distance, projected on the ground plane, between the first marker and the second marker. A seventh measure indicates a seventh distance indicating difference in height between the second camera and at least one of the first and third cameras. A first angle measure indicates a feature angle identified in a first image plane representing the first field of view. A second angle measure indicates the feature angle identified in a second image plane representing the second field of view. A third angle measure indicates the feature angle identified in a third image plane representing the third field of view. The calibration apparatus is configured for:
The calibration apparatus is configured for estimating a third focal length of the third camera based on
the first measure,
the second measure,
a third position of the first marker in the third field of view,
a fourth position of the second marker in the third field of view,
the sixth measure, and
an image resolution of the third camera.

The calibration apparatus is configured for estimating initial orientation components of the third transformation based on
the distant object's position in the first camera,
an image resolution of the first camera,
the first focal length,
the distant object's position in the third camera,
the image resolution of the third camera,
the third focal length,
the object distance,
the first angle measure, and
the third angle measure.

The calibration apparatus is configured for estimating initial translation components of the third transformation to be zero.

The calibration apparatus is configured for iteratively determining updated orientation components of the third transformation and an updated third focal length under a third constraint that a third reprojection error for at least one reprojection point in the first and third fields of view satisfies a third condition for allowed reprojection error.

The calibration apparatus is configured for estimating a second focal length of the second camera based on
the fourth measure,
the fifth measure,
a first position of the first marker in the second field of view,
a second position of the second marker in the second field of view,
the sixth measure, and
an image resolution of the second camera.

The calibration apparatus is configured for estimating initial orientation components of the second transformation based on
the distant object's position in the second camera,
an image resolution of the second camera,
the second focal length, and
the distant object's position in the third camera,
an image resolution of the third camera,
the third focal length,
the object distance,
the third measure,
the seventh measure,
the second angle measure, and
the third angle measure.

The calibration apparatus is configured for estimating initial second translation components of the second transformation based on
the third measure defining a radius of an imaginary circle centered at camera B,
the second measure defining a radius of an imaginary circle centered at the second marker L,
the fifth measure, and
the seventh measure.

The calibration apparatus is configured for iteratively determining updated orientation and translation components for the second transformation and an updated second focal length under a second constraint that a second reprojection error for at least one reprojection point in the second and third fields of view satisfies a second condition for allowed reprojection error.

The calibration apparatus is configured for estimating initial first orientation components for the first transformation based on the updated second orientation components and the updated third orientation components.

The calibration apparatus is configured for estimating initial translation components for the first transformation based on the updated second translation components.

The calibration apparatus is configured for iteratively determining at least updated orientation components for the first transformation and a further updated second focal length under a first constraint that a first reprojection error for at least one reprojection point in the first and second fields of view satisfies a first condition for allowed reprojection error.

According to further aspect, the object is achieved by a computer program and a computer program carrier corresponding to the aspects above.

### BRIEF DESCRIPTION OF THE DRAWINGS

Figure 1 is an overview of an example of a system according to some embodiments herein.
Figure 2a and Figure 2b are side views of the first and second cameras, respectively, of the system according to some embodiments herein.
Figure 3 is a flowchart illustrating the method according to some embodiments herein.
Figure 4 is a top view of the cameras in Figure 1.
Figure 5a and Figure 5b are further top views illustrating angles and distance in relation to two cameras.
Figure 6 is an illustration of how to obtain estimations of two translation components.
Figure 7 includes two side views illustrating how to obtain an estimate of an orientation component.
Figure 8 is a side view of the cameras in Figure 1.
Figure 9 is a block diagram illustrating an example of the calibration apparatus according to some embodiments herein.

### DETAILED DESCRIPTION

In the following description, the same, or similar, reference numerals have been used to denote the same, or similar, features, examples, items, elements or the like, when applicable.

As used herein, the expression "coordinate system of a camera" may refer to that the camera's field of view is associated with, such as aligned with, corresponding to, or the like, a coordinate system, such as in three dimensions. For example, the coordinate system may describe a position of the camera and/or a rotation of the camera along three spatial dimensions, x (width), y (height) and z (length/depth).

As used herein, the expression "transformation", or "coordinate transformation", refers a transformation of orientation and/or translation components between one coordinate system of one camera and another coordinate system of another camera. The transformation can apply for transformation from said one camera to said another camera, and an inverse transformation can be obtained mathematically for transformation from said another camera to said one camera. Orientation component can sometimes be referred to as rotation component.

As used herein, the expression "image resolution of a camera" refers to a two-dimensional image resolution of the camera, such as a first number of pixels by a second number of pixels, 640x480, 1600x1280, etc.

As used herein, the term "marker" may refer to a tee marker, a corner of tee box, an identification post for marking the tee, or the like.

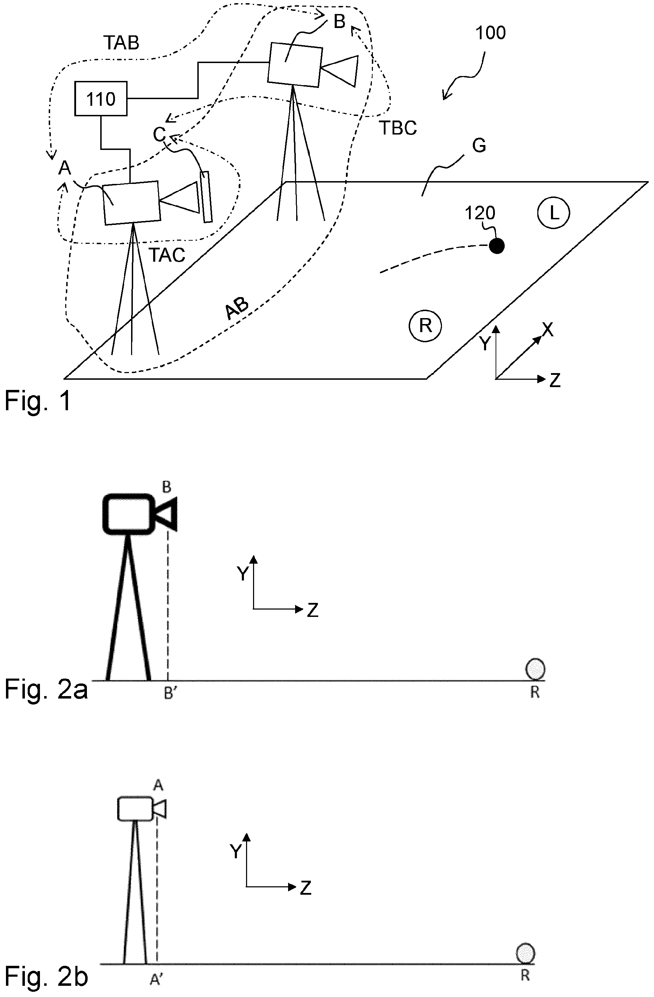

Figure 1, Figure 2a and Figure 2b illustrate an exemplifying set up of a system 100 configured to perform the methods described herein.

The system 100 includes a first camera A, such as a tracking sensor, or the like, and a second camera B, such as a broadcast camera, a video camera or the like. The tracking sensor can include a video camera and optionally a radar, which then can be fixedly mounted relatively each other.

The system 100 further includes a calibration apparatus 110, such as a calibration device, a computer, a computer function, a cloud function, a serverless backend function, an image processing device, a processing module or the like. The calibration apparatus 110 may be separated, but connected to, the first and second cameras A, B. In some examples, the calibration apparatus 110 can be realized as a computer function residing and executable in a cloud, such as a virtual and/or physical computer in a data center or the like. In some examples, the calibration apparatus 110 can be built into at least one of the first and second cameras A, B. Further, the calibration apparatus 110 may be realized as a separate physical entity in the form of a calibration device.

In the examples herein, the calibration apparatus 110 is configured to be connectable to the first and second camera A, B for transferring of information, such as images, distance information, angle information, instructions, blob information, trace information, tracking stream(s), messages, or the like, to/from the first and second cameras A, B.

The first and second cameras A, B may be located spaced away from each other, e.g., at a distance from each other. As shown in Figure 1, the first and second cameras A, B can be spaced away from, such as standing on, hanging over, laying on, or the like, a ground plane G, e.g., on the same side of the ground plane G. A respective optical center of each of the first and second cameras A, B is located at a distance from the ground plane G. The ground plane G may be defined by an x-axis and a z-axis as shown in Figure 1. A y-axis is shown perpendicularly to the x-axis and the z-axis. The y-axis represents height, the x-axis represents width, and the z-axis represents depth, or distance, e.g., in the camera's viewing direction or in the main direction of a movement of the sports projectile, such as a golf ball, or the like.

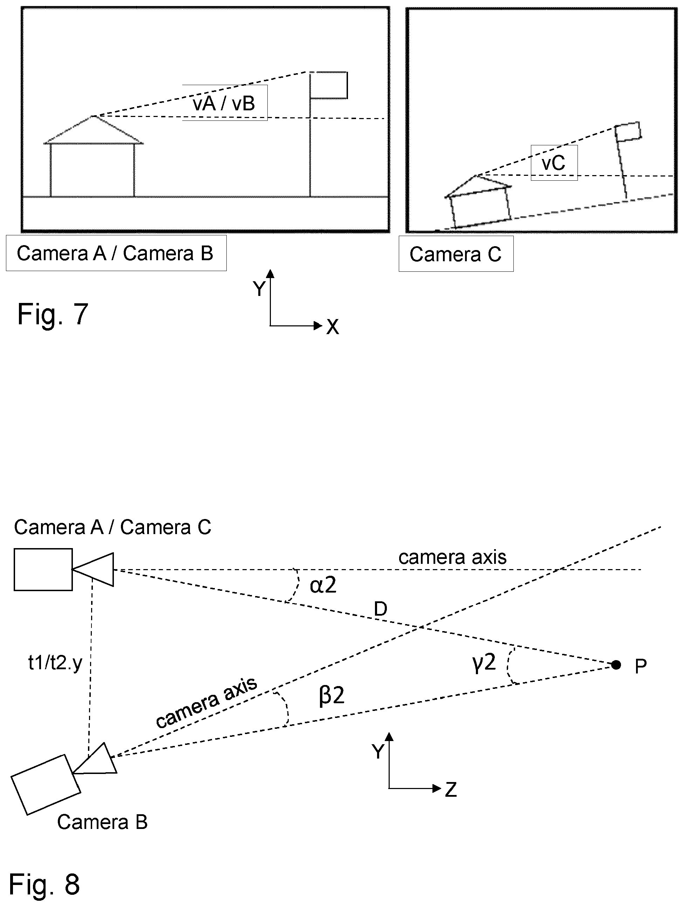

A first field of view of the first camera A at least partially overlaps with a second field of view of the second camera B. A distant object P, shown in Figure 8, is present in both the first and second fields of view. Furthermore, a first marker R and a second marker L are visible in the second field of view, e.g., at least the second field of view. The first marker R and the second marker L may thus be visible in the first field of view, but not necessarily. Generally, the first and second marker R, L can be so called tee markers that are commonly used on a golfing area, such as a golf course, a driving range or the like, to indicate a tee, from which golf balls can be shot by a player. The first marker R can be a right tee marker and the second marker L can be a left tee marker. In some examples, the first and second marker R, L can be a front, right corner and a front, left corner of a bounding box that indicates the tee.

For golf tracing purposes, a method to calibrate a tracking sensor and a broadcast camera without adding any reference items, such as reference markings at known positions, to the golf course environment is provided. Reference items can in this context refer to any aid that is placed in the golf course environment for the purpose, e.g. only purpose, of calibration, or at least not for the purpose of playing golf. With the method herein, a first transformation between a first camera, such as a tracking camera, and a second camera, such as a broadcast camera, is estimated. Thereby, a golf ball tracking sensor can be placed at an arbitrary position on the tee box, well separated from the broadcast camera. The solution may benefit from using a measuring tape, a plumb bob, a laser distance measurement device, a laser range finder, and/or the like. It may be preferred that both tee markers, referred to as a first and second marker herein, are visible in the image of the second camera. Notably, the first and second markers are part of the golf course environment for playing purposes. The embodiments herein thus advantageously use the already existing first and second markers.

It may be noted that the following notations are used herein:
- tX:: three-dimensional (x,y,z) position/translation of one camera in the coordinate system of another camera. In more detail, a first translation component is denoted tX.x, a second translation component is denoted tX.z, and a third translation component is denoted tX.y. E.g. t1 for the translation components of the first transformation, t2 for the translation components of the second transformation, and t3 for the translation components of the third transformation.
- rX:: three-dimensional (x,y,z) orientation (rotation along the x,y and z axis) of one camera in the coordinate system of another camera. In more detail, a first orientation component is denoted rX.x, a second orientation component is denoted rX.y, and a third orientation component is denoted rX.z. E.g. r1 for the orientation components of the first transformation, r2 for the orientation components of the second transformation, and r3 for the orientation components of the third transformation.
- f:: focal length of a camera.
- f':: the distance, in millimeters, between the focal point of the lens and the image sensor at a given zoom level and focus level (when a lens is focused at infinity f' is equal to the focal length of the lens/camera f). f'a is a known focal length of the first camera A.
- f'b:: estimated focal length of the second camera B.
- f'c:: estimated focal length of the third camera C.
- p':: two-dimensional (x,y) position in a camera's image plane.
- Cs:: two-dimensional (x,y) sensor size (cs) in millimeters of a camera (csa for a first camera A, csb for a second camera B, and csc for a third camera C).
- Res:: two-dimensional (x,y) image resolution in pixels of a camera (res for a Camera A or a Camera B is denoted resa and resb respectively, and for the third camera C resc).
- Camera A:: a first camera, such as a tracking camera.
- Camera B:: a second camera, such as the broadcast camera.
- Camera C:: a third camera, such as a still image digital camera, a camera of a smartphone, a camera of a tablet PC, or the like.
- fn(...):: A combination of various well-known mathematical functions, trigonometric functions, geometric rules and/or formulas and/or theorems, and/or the like, such as tangent, sinus, cosine, arcus tangent, arcus sinus, arcus cosine, squared root, Pythagoras theorem, triangle conformity etc. n denotes a counter used to indicate that this function may be different from one or more of the other functions disclosed herein.
- P: A distinct object far away visible in cameras A, B, and C.

For the purposes of the method herein, for the first camera A, f is considered to be constant and known and f', e.g. denoted f'a, is assumed to be approximately equal to f.

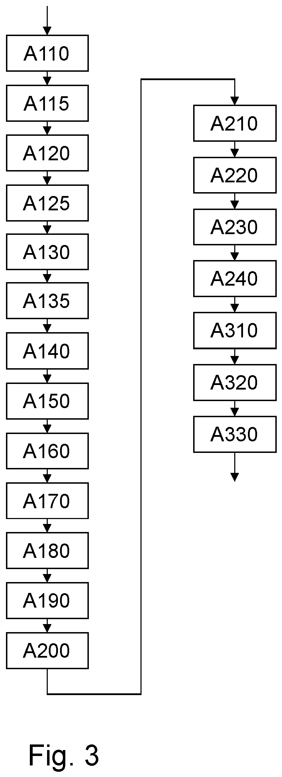

Figure 3 shows a schematic flowchart, illustrating an exemplifying method according to the embodiments herein. Thus, as an example, the calibration apparatus 110 can perform a method for determining a first transformation TAB between a first coordinate system of a first camera A and a second coordinate system of a second camera B. The method can be a computer-implemented method for determining the first transformation, e.g., a transformation from the first coordinate system of the first camera A to the second coordinate system of the second camera B, or vice versa by inverting the transformation. As mentioned, the first and second cameras A, B are spaced away from each other and located above a ground plane G, xz-plane. As an example, the first and second cameras A, B are standing on the ground plane G.

A first field of view of the first camera A at least partially overlaps with a second field of view of the second camera B. A third camera C has a third field of view partially overlapping with the first and second fields of view. The third camera's C position and the first camera's A position are approximated to be equal, e.g. in the first coordinate system. Notably, the third camera C can be considered to have same position/translation as the first camera A, e.g. in the first coordinate system, but it can have different orientation as compared to the first camera A.

A distant object P is present in the first, second and third fields of view and located at an object distance D from a location AB at at least one of the first camera A, the second camera B, and the third camera C, preferably at the first camera A.

A first marker R and a second marker L are located at the ground plane G and the first and second markers R, L are visible in the second and third fields of view.

A second transformation TBC refers to transformation between the second coordinate system of the second camera B and a third coordinate system of the third camera C. A third transformation TAC refers to transformation between the first coordinate system of the first camera A and the third coordinate system of the third camera C.

As mentioned, the first camera A has a first focal length f'a, i.e. a known focal length.

A first measure A'R indicates a first distance, projected on the ground plane G, between the first marker R and at least one of the first camera A and the third camera C. A second measure A'L indicates a second distance, projected on the ground plane G, between the second marker L and at least one of the first camera A and the third camera C. A third measure A'B' indicates a third distance, projected on the ground plane G, between the second camera B and at least one of the first camera A and the third camera C. A fourth measure B'R indicates a fourth distance, projected on the ground plane G, between the second camera B and the first marker R. A fifth measure B'L indicates a fifth distance, projected on the ground plane G, between the second camera B and the second marker L. A sixth measure RL indicates a sixth distance, projected on the ground plane G, between the first marker R and the second marker L.

It may in particular be noted that for example the first distance is a projection of the distance between the first camera A and the first marker R on the ground plane G. Likewise:
- the second distance is a projection of the distance between the first camera A and the second marker L on the ground plane G,
- the fourth distance is a projection of the distance between the second camera B and the first marker R on the ground plane G,
- the fifth distance is a projection of the distance between the second camera B and the second marker L on the ground plane G.

These are noteworthy since the markers' R, L and the cameras' centers differ in height above the ground plane G. In this manner, it is thus the projections of the distances between the markers and cameras on the ground plane G that are reflected by the measures mentioned above. Since the markers can be located at the ground, the sixth distance can inherently be located at, or in, the ground plane, or the projection on the ground plane is approximately equal to the unprojected sixth distance.

A seventh measure hAC-B indicates a seventh distance indicating difference in height between the second camera B and at least one of the first and third cameras A, C. A first angle measure vA indicates a feature angle identified in a first image plane representing the first field of view. A second angle measure vB indicates the feature angle identified in a second image plane representing the second field of view. A third angle measure vC indicates the feature angle identified in a third image plane representing the third field of view.

One or more of the following actions can be performed, e.g. in any suitable order. The actions can be performed by one or more physical and/or virtual units.

### Action A110

With reference to Figure 2a and Figure 2b, it can be seen that:
A' denotes the projected optical center of camera A in the ground plane G,
B' denotes the projected optical center of camera B in the ground plane G,
R denotes the position of the first marker in the ground plane G, and
L denotes the position of the second marker in the ground plane G.

The projected position of the camera lens' optical center on the ground plane G is estimated, e.g. using a plumb bob with a string, a digital distance measurement device, or the like. The position on the ground may be temporarily marked. This is done for the first camera A and the second camera B. These temporary or virtual points A', B' on the ground plane G may be referred to as a first point A' and a second point B'.

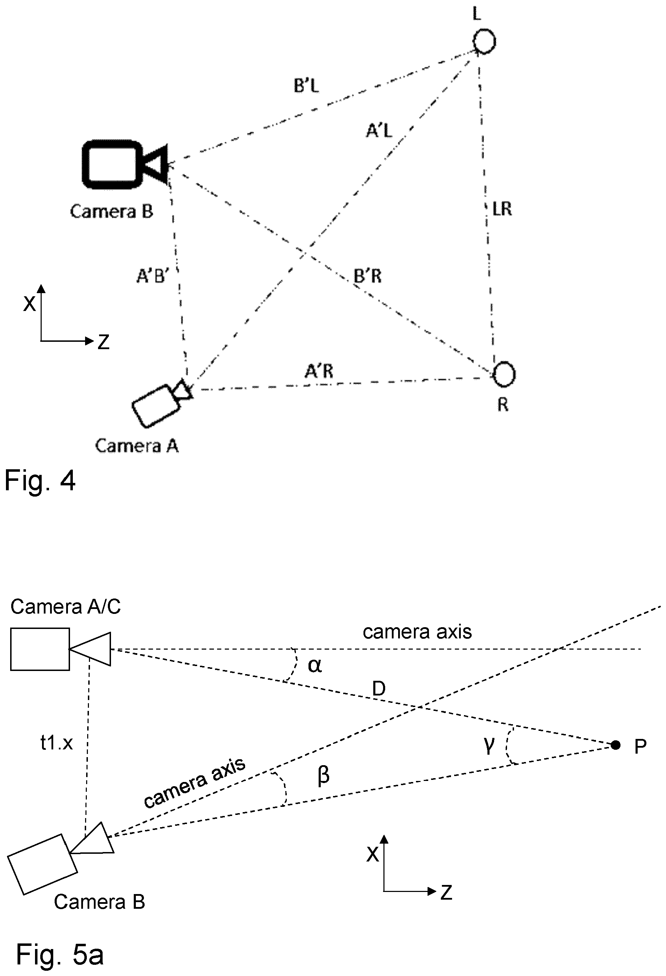

With reference to Figure 4, it can be seen that:
A'B' denotes distance from A' to B',
A'L denotes distance from A' to L,
A'R denotes distance from A' to R,
B'R denotes distance from B' to R,
B'L denotes distance from B' to L, and
RL denotes distance from R to L.

Accordingly, the calibration apparatus 110 may obtain, such as receives, fetches or the like, a set of measures, e.g. as user input, from a memory or the like. The memory can be any memory accessible by the calibration apparatus 110. The set of measures includes at least five of:
the first measure A'R,
the second measure A'L,
the third measure A'B',
the fourth measure B'R,
the fifth measure B'L, or
the sixth measure RL.

In some examples, when the set of measures comprises all but one measure of the first, second, third, fourth, fifth and sixth measures, the calibration apparatus 110 can calculate said one measure based on the set of measures.

As an example, at least five of these six measures can be measured, e.g., using a measuring tape, a laser measuring device, or the like. Preferably, the measures are taken along, e.g. parallelly with, the ground plane G.

### Action A115

The calibration apparatus 110 may obtain, such as receive, fetch or the like, the seventh measure, the first angle measure vA, the second angle measure vB, and the third angle measure vC, e.g. as user input, from a memory or the like. The memory can be any memory accessible by the calibration apparatus 110.

As an example, the calibration apparatus 110 can obtain the seventh measure as an indication of a translation component t0.y, e.g., by means of measurement, for the second transformation TBC.

As an example, an estimation of t0.y may be obtained by measuring the height above ground, e.g., the ground plane G, with a measuring tape for the second camera B and the first or third camera A, C. The difference in height is the estimation of the translation component, t0.y, for the second transformation, or even the first transformation.

### Action A120

The calibration apparatus 110 may obtain, such as receive, fetch or the like, the object distance D, e.g. as user input, from a memory or the like. The memory can be any memory accessible by the calibration apparatus 110.

As mentioned, the object distance D is between the distant object P and a location AB at the first camera A and/or the second camera B and/or the third camera C. The distant object may be visible in the first, second and third cameras A, B, C, i.e. in the fields of view thereof. In this manner, the calibration apparatus 110 may obtain an indication of the object distance D, e.g., a measure thereof. This may mean that the indication may be obtained by means of a measurement. As an example, a laser range finder may be used to measure the distance D from at least one of cameras A, B and C to the distinct object P, e.g., being located far away. A position of the distant object P on the image sensors in camera A, B and C are denoted pa, pb, and pc, respectively. T1.x can be approximated to the third measure A'B'. It may here be noted that the object distance D may be obtained between a point on distant object P and the location AB. The location AB can be at the first camera A, the second camera B, or the third camera between the first, second and third cameras A, B, C or near the first, second or third camera A, B, C, or the like.

As an example, the calibration apparatus 110 can receive, e.g., by input from a user, an indication of the object distance D. Additionally, and/or alternatively, the calibration apparatus 110 can obtain the indication from a memory, accessible by the calibration apparatus 110. In some examples, the indication is received from a measurement device. Such measurement device may be integrated with one of the first, second and third cameras A, B, C or be separated therefrom.

In view of the above, it shall be understood that the object distance D can be used as an approximation and can refer to one or more of the following distances:
a distance between the distant object P and the first camera A, e.g., an optical center of optics of the first camera A,
a distance between the distant object P and the second camera B, e.g., an optical center of optics of the second camera B,
a distance between the distant object P and a location AB in the vicinity of or between the first camera A and/or the second camera B, or
a combination thereof.

### Action A125

The calibration apparatus 110 may obtain, such as receive, fetch, or the like, the first focal length of the first camera A, e.g. as user input, from a memory or the like. The memory can be any memory accessible by the calibration apparatus 110.

### Action A130

The calibration apparatus 110 may calculate a two-dimensional sensor size of the first, second and third camera, respectively, based on the image resolution of the first, second and third camera, respectively.

As an example, the two-dimensional sensor size and/or aspect ratio can be obtained from tables of sensor types, sensor manufacturer's data sheets and the like. In some examples, a standard 35 mm film (full frame) can be assumed. However, in case an actual aspect ratio of processed image indicates that the image has not been captured by a 35 mm film sensor, it is preferred to re-scale the image. A 35 mm film sensor implies a sensor size of 36 x 24 mm. Hence, as an example, when the actual aspect ratio differs from 3:2 (i.e. 36:24), the sensor size can be rescaled to for example 36 (unchanged) by 20 (rescaled), where one of the height or width is maintained and the other one is rescaled.

### Action A135

The calibration apparatus 110 may calculate an aspect ratio of images captured by the first, second and third camera, respectively, based on the image resolution of the first, second and third camera, respectively.

As an example, an aspect ratio can be calculated, e.g. by prime factorizing the two-dimensional image resolution and subsequently eliminating redundant factors. Thus, an aspect ratio like e.g. 4:3, 14:9, 16:9, 16:10, 1.85:1, 2:1, etc. can be obtained.

In view of action A130 and A135, it is to be noted that image resolution, aspect ratio, and/or sensor size may be used interchangeably in the following, since if one is known the others can be determined, e.g. provided that a size of each pixel is known, e.g. from data sheets, sensor manufacturer's tables, or the like.

### Action A140

The calibration apparatus 110 estimates a third focal length of the third camera C based on
the first measure A'R,
the second measure A'L,
a third position of the first marker R in the third field of view r'3,
a fourth position of the second marker L in the third field of view I'3,
the sixth measure RL, and
an image resolution of the third camera C, resc, e.g. in the x-dimension.

As an example, positions of the first and second markers R, L in the third field of view may be annotated, i.e., I'3 and r'3 respectively. As an example, the third and fourth positions can be obtained from an image captured by the third camera C, such as in the xy-plane of the image. The captured image can be obtained, such as received or the like, by the calibration apparatus 110 in order for the calibration apparatus 110 to gain access to the image and obtain, such as identify, or the like, the third and fourth positions in the image of the third camera C.

The sensor size csc of the third camera C can be estimated, e.g. via the aspect ratio, as explained above, at least in the x-dimension, preferably both x- and y-dimensions.

Triangle conformity yields an initial estimate of the focal length of the third camera C, denoted f'c. Notably, the focal length of the first camera A is considered to be constant and known as mentioned above.
f'c ≈ f1(A'R, A'L, r'3, I'3, RL, resc, and optionally csc). As an example, f1= (A'R + A'L) * csc.x * abs(r'3.x - I'3.x) / (2 * RL * resc.x), where csc.x could be expressed as a function of resc.x. It shall be noted that the formula f1, and the other formulas presented below, are examples. In other examples, different formulas can be used for calculating the desired entities. Furthermore, "arcus sine" is the same as "arcsin", "arcus tangent" is the same as "arctan" and "arcus cosine" is the same as "arccos" as applicable.

In some examples, depending on what formula is used, the calibration apparatus 110 can estimate the third focal length of the third camera C based on at least some of
the first measure A'R,
the second measure A'L,
the third position of the first marker R in the third field of view r'3,
the fourth position of the second marker L in the third field of view I'3,
the sixth measure RL, and
the image resolution of the third camera C, resc, e.g. in the x-dimension.

In e.g. at least action A150, A160, and A170 the third transformation TAC is calculated.

### Action A150

The calibration apparatus 110 estimates initial orientation components r3 of the third transformation TAC based on
the distant object's P position in the first camera A, i.e. a position, in the first camera A, of the distant object P,
an image resolution of the first camera A resa,
the first focal length,
the distant object's P position in the third camera C,
the image resolution of the third camera C,
the third focal length,
the object distance D,
the first angle measure vA, and
the third angle measure vC.

Here, initial orientation components r3 of the third transformation TAC refers to initial values/estimates of the orientation components r3 of the third transformation TAC.

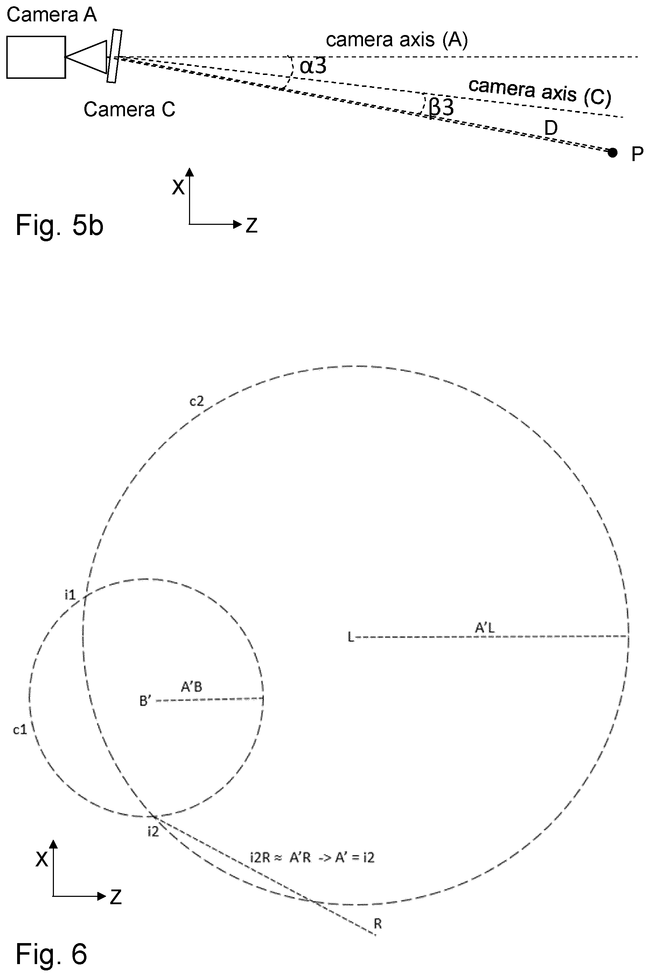

As an example, the calibration apparatus 110 can estimate an orientation component r3.y of the third transformation TAC by determining a third set of angles, as illustrated in Figure 5b. The third set of angles comprises a seventh angle α3 and an eighth angle β3.

The calibration apparatus 110 can determine the seventh angle α3, in the ground plane G. The seventh angle α3 is indicative of the distant object's P deviation from the first camera's A straight viewing direction. The determining/determination A260 is based on:
the distant object's position in the first camera A, pa,
sensor size along x-axis of the first camera A, csa,
the focal length of the first camera A, f'a, and
the object distance D, such as a distance between the distant object P and the
first camera A or the like. $α 3 \approx f 2 \left(pa, csa, f′a, D\right)$

See example of f2 above. Hence, as an example α3 ≈ arc tan (((pa.x - resa.x * 0.5) *csa.x / resa.x) / f'a).

As an example, the object distance D can be used to tune the value of f'a.

For simplicity, sensor size is referenced above, but as already mentioned the sensor size can be determined from the resolution.

The calibration apparatus 110 can determine an eighth angle β3, in the ground plane G, xz, indicative of the distant object's P deviation from the third camera's C straight viewing direction based on:
the distant object's position in the third camera C,
sensor size along x-axis of the third camera C,
the focal length of the third camera C, and
the object distance D, such as a distance between the distant object P and the
third camera C or the like.

β3 ≈ f2(pc, csc, f'c, D). f2 may be the same function as above, e.g., β3 ≈ arc tan(((pc.x - resc.x * 0.5) *csc.x / resc.x) / f'c).

As an example, the object distance D can be used to tune the value of f'c.

In view of the actions relating to the seventh and eighth angle, looking down the negative y-axis, the two angles α3 and β3 in the ground plane G can be calculated using ordinary trigonometry.

The calibration apparatus 110 can estimate the orientation component r3.y of the third transformation TAC based on the seventh angle and the eighth angle.

In some embodiments, the calibration apparatus 110 estimates the orientation component r3.y by calculating the orientation component r3.y as the seventh angle reduced by the eighth angle.

Expressed using the notation herein: r3.y ≈ α3 - β3.

An orientation component r3.x of the third transformation can be estimated by performing corresponding calculations as above, while considering angles in the yz-plane, aka a second plane yz that is perpendicular to the ground plane G and that is parallel with the first camera's A straight viewing direction.

As an example, an orientation component r3.z of the third transformation can be estimated based on
the first angle measure vA, and
the third angle measure vC.

The first angle measure vA is given in the first coordinate system of the first camera A and the third angle measure vC is given in the third coordinate system of the third camera C.

Generally, an angle measure vX, such as any one or more of the first, second and third angle measures vA, vB and vC can be obtained by measuring an identifiable angle in the field of view of the camera under observation, such as the first, second and/or third camera A, B, C. Such identifiable angle can be defined by two feature points, where each feature point can be identified manually and/or by means of image recognition.

The feature points may preferably be centered but spaced away from each other. The feature points are typically located distant to the first, second and third cameras A, B, C. The feature points may be points of, such as at, on or the like, the distant object P. However, the feature points may alternatively or also, be taken from one or more other points identified in one or more of the first, second and third fields of view.

As an example, the calibration apparatus 110 can obtain at least a first indication and at least a second indication. The first indication relates to a first distance between the first camera A and a first feature point, and wherein the second indication relates to a second distance between the first camera A and a second feature point. The first and second feature points are included in one or more of the first, second and third fields of view. As an example, a laser range finder can be used to measure the first distance from the first camera A to any number of feature points visible in one or more of the first, second and third cameras, such as the first and second feature points.

As an example, r3.z is estimated as the difference between the two angle measures vA, vC, i.e., r3.z ≈ vA - vC. Reference is made to Figure 7.

The feature points, denoted p1, p2, can generally be visible in the fields of view of both cameras, such as the first camera A and the third camera C. Their two-dimensional image positions are denoted as p1a, p1c, p2a and p2c.

This yields that: $vA = arcus tangent \left(\left(p1a.y-p2a.y\right)/\left(p1a.x-p2a.x\right)\right) ,$ and $vC = arcus tangent \left(\left(p1c.y-p2c.y\right)/\left(p1c.x-p2c.x\right)\right) .$

Therefore, depending on the formulas used, the calibration apparatus 110 can estimate the initial orientation components r3 of the third transformation TAC based on at least some of
the distant object's P position in the first camera A, i.e. a position, in the first camera A, of the distant object P,
the image resolution of the first camera A resa,
the first focal length,
the distant object's P position in the third camera C,
the image resolution of the third camera C,
the third focal length,
the object distance D,
the first angle measure vA, and
the third angle measure vC.

### Action A160

The calibration apparatus 110 estimates initial translation components t3 of the third transformation TAC to be zero. This is consequence of that the first and second camera A, C are considered to be located at the same position, e.g. in the first coordinate system. As mentioned, the first and second cameras A, C can have different orientations, e.g. different viewing directions, but the first and second fields of view are nevertheless at least partially overlapping.

### Action A170

Since the initial estimates of the translation and orientation components t3, r3 of the third transformation TAC now have been set, improvements thereof can be achieved by iteration under constraints.

Thus, the calibration apparatus 110 iteratively determines updated orientation components of the third transformation TAC and an updated third focal length under a third constraint that a third reprojection error for at least one reprojection point in the first and third fields of view satisfies a third condition for allowed reprojection error.

In some examples, the calibration apparatus 110 can perform the iteratively determining of the updated orientation components of the third transformation TAC and the updated third focal length by solving a third mathematical equation system including orientation components and translation components, e.g. as initially estimated but at least one thereof being adjusted in each iteration, of the third transformation and the third focal length while satisfying the third constraint, thereby obtaining the updated orientation components for the third transformation and the updated third focal length.

Expressed differently, as an example, with the initial estimations of t3, r3 and f'c, the third transformation between camera A and camera C is created. The quality of any estimation of t3, r3 and f'c can be evaluated by comparing estimated positions of, e.g., a reprojection point or the like, and actual, or detected, positions of the reprojection point(s). The quality can be measured as the sum of all reprojection errors obtain with the third transformation. An optimization problem for r3 and f'c, is formulated, where a cost function is a weighted sum of all reprojection error(s). As an example, a known gradient descend procedure may be used to find a solution to the optimization problem. Gradient descent procedures are well-known in related mathematical literature and refers to a first-order iterative optimization algorithm for finding a local minimum of a differentiable function.

As an example, the iteratively determining can improve the estimates of the orientation components r3 and the third focal length, but typically the estimates of the translation components t3 remains to be zero.

In e.g. at least action A180, A190, A200, and A210 below the second transformation TBC is calculated.

### Action A180

The calibration apparatus 110 estimates a second focal length of the second camera B based on
the fourth measure B'R,
the fifth measure B'L,
a first position of the first marker R in the second field of view r',
a second position of the second marker L in the second field of view I',
the sixth measure RL, and
an image resolution of the second camera B, e.g. in the x-dimension.

As an example, positions of the first and second markers in the second field of view of the second camera B may be annotated, i.e., I' and r' respectively. As an example, the first and second positions can be obtained from an image captured by the second camera B, such as in the xy-plane of the image. The captured image can be obtained, such as received or the like, by the calibration apparatus 110 in order for the calibration apparatus 110 to gain access to the image and obtain, such as identify, or the like, the first and second positions in the image of the second camera B.

The sensor size csb of the third camera C can be estimated, e.g. via the aspect ratio, as explained above, at least in the x-dimension.

Triangle conformity yields an initial estimate of f' for camera B, denoted f'b. Notably, the focal length of the first camera A is considered to be constant and known as mentioned above.
f'b ≈ f1(B'R, B'L, r', I', csb, RL, resb). As an example, f1= (B'R + B'L) * csb.x * abs(r'.x - l'.x) / (2 * RL * resb.x), where csb.x could be expressed as a function of resb.x.

It shall be noted that the formula f1, and the other formulas presented below, are examples. In other examples, different formulas can be used for calculating the desired entities. Furthermore, "arcus sine" is the same as "arcsin", "arcus tangent" is the same as "arctan" and "arcus cosine" is the same as "arccos" as applicable.

In some examples, depending on the formula used, the calibration apparatus 110 can estimate the second focal length of the second camera B based on at least some of
the fourth measure B'R,
the fifth measure B'L,
the first position of the first marker R in the second field of view r',
the second position of the second marker L in the second field of view I',
the sixth measure RL, and
an image resolution of the second camera B, e.g. in the x-dimension.

### Action A190

The calibration apparatus 110 estimates initial orientation components r2 of the second transformation TBC based on
the distant object's position in the second camera B,
an image resolution of the second camera B resb,
the second focal length, and
the distant object's position in the third camera C,
an image resolution of the third camera C,
the third focal length,
the object distance D,
the third measure A'B',
the seventh measure hAC-B,
the second angle measure vB, and
the third angle measure vC.

As an example, the calibration apparatus 110 can estimate an orientation component r2.y of the second transformation TBC by determining a second set of angles, as illustrated in Figure 5a. The second set of angles comprises:
a first angle α, in a first plane G', xz that is parallel with the ground plane G, indicative of the distant object's P deviation from the third camera's C straight viewing direction, aka camera axis,
a second angle β, in the first plane G', indicative of the distant object's deviation from the second camera's B straight viewing direction, and
a third angle Υ, in the first plane G', having a vertex at the distant object's position and two rays to the first and second cameras A, B, respectively.

The calibration apparatus 110 can determine the first angle α based on:
the distant object's P position in the third camera C, pc,
sensor size along x-axis of the third camera C, csc,
a two-dimensional image resolution of the third camera C, resc, and
the object distance D, such as a distance between the distant object P and the third camera C or the like.

As observed along the y-axis, e.g., down the negative y-axis, the three first, second and third angles α, β, Υ in the xz-plane may be calculated using ordinary trigonometry, see also Figure 5a. $α \approx f 2 \left(pc, csc, f′c, D\right) .$

As an example, α ≈ arc tan(((pc.x - resc.x * 0.5) *csc.x / resc.x) / f'c), where csc can be expressed as a function of resc (as mentioned earlier).

As an example, the object distance D can be used to tune the value of f'c.

The calibration apparatus 110 can determine the second angle β based on:
the distant object's position in the second camera B, pb,
sensor size, e.g., along x-axis, of the second camera B, csb,
a two-dimensional image resolution of the second camera B, resb,
the distance D between the second or third (or point in vicinity of camera B and C) camera B, C and the distant object P.

β ≈ f2(pb, csb, f'b, D), f2 can be the same function as above. As an example, β ≈ arctan (((pb.x - resb.x * 0.5) *csb.x / resb.x) / f'b). Again, csb can be expressed as a function of resb.

As an example, the object distance D can be used to tune the value of f'b.

The calibration apparatus 110 can determine the third angle Y based on:
the third measure A'B', and
the object distance D.

The third measure is used as an initial estimation of t2.x, while recalling that the first and third cameras A, C are considered to be located at the same position, or approximately the same position.
Υ ≈ f3(t2.x, D). As an example, f3= t2.x / D.

Now, the calibration apparatus 110 can estimate an orientation component r2.y of the second transformation in the first plane G' based on the first angle, the second angle and the third angle. In some embodiments, the calibration apparatus 110 estimates the orientation component r2.y by calculating the orientation component r2.y as the first angle reduced by the second angle and adding the third angle. Expressed using the notation herein: r0.y ≈ α - β + Υ.

Furthermore, with reference to Figure 8, an orientation component r2.x of the second transformation TBC can be determined in a manner corresponding to how the orientation component r2.y above can be determined.

In more detail and as an example, the calibration apparatus 110 can estimate the orientation component r2.x of the second transformation TBC by determining a third set of angles, as illustrated in Figure 8. The third set of angles comprises:
a fourth angle α2, in a second plane yz that is perpendicular to the ground plane G and that is parallel with the third camera's C straight viewing direction,
a fifth angle β2, in the second plane yz, indicative of the distant object's P deviation from the second camera's B straight viewing direction, and
a sixth angle Y2, in the second plane yz having a vertex at the distant object's position and two rays to the second and third cameras B, C, respectively.

The fourth angle α2 is indicative of the distant object's P deviation from the third camera's C straight viewing direction.

The calibration apparatus 110 can determine the fourth angle α2 based on:
the distant object's position in the third camera C, pc,
sensor size along y-axis of the third camera C, csc,
the third focal length of the third camera C, f'c, and
the object distance D, such as a distance between the distant object P and the
first camera A or the like. $α 2 \approx f 2 \left(pa, csa, f′a, D\right)$

See example of f2 above. Hence, as an example α2 ≈ arc tan (((pc.y - resc.y * 0.5) *csc.y / resc.y) / f'a).

As an example, the object distance D can be used to tune the value of f'a.

The calibration apparatus 110 can determine the fifth angle β2 based on:
the distant object's position in the second camera B,
sensor size along y-axis of the second camera B,
the focal length of the second camera B, and
the object distance D, such as a distance between the distant object P and the
second camera B or the like.

β2 ≈ f2(pb, csb, f'b, D). f2 may be the same function as above, e.g., β2 ≈ arc tan (((pb.y - resb.y * 0.5) *csb.y / resb.y) / f'b).

As an example, the object distance D can be used to tune the value of f'b.

The calibration apparatus 110 can determine the sixth angle Y2 based on:
the seventh measure hAC-B, and
the object distance D.

Υ2 ≈ f3(t2.y, D), where f3 can be the same function as above. As an example, Υ2≈ t2.y / D. The seventh measure can be used as an initial estimation of t2.y, e.g. while recalling that the first and third cameras A, C are considered to be located at the same position, or approximately the same position.

In view of the actions relating to the fourth, fifth and sixth angle, looking down the negative x-axis, the three angles α2, β2 and Υ2 in the yz-plane have been calculated using ordinary trigonometry.

The calibration apparatus 110 estimates an orientation component r2.x of the second transformation TBC based on the fourth angle, the fifth angle and the sixth angle. In some embodiments, the calibration apparatus 110 estimates the orientation component r2.x by calculating the orientation component r2.x as the fourth angle reduced by the fifth angle and adding the sixth angle. Expressed using the notation herein: r2.x ≈ α2 - β2 + Υ2.

Furthermore, r2.z can be estimated based on the two angle measures vB, vC, e.g. the second angle measure vB and the third angle measure vC, in the same or similar manner as explained above.

Accordingly, as an example, r2.z is estimated as the difference between the two angle measures vB, vC, i.e., r2.z ≈ vB - vC. Reference is made to Figure 7.

The feature points, denoted p1, p2, can generally be visible in the fields of view of both cameras, such as the second camera B and the third camera C. Their two-dimensional image positions are denoted as p1b, p1c, p2b and p2c.

This yields that: $vB = arcus tangent \left(\left(p1b.y-p2b.y\right)/\left(p1b.x-p2b.x\right)\right) ,$ and $vC = arcus tangent \left(\left(p1c.y-p2c.y\right)/\left(p1c.x-p2c.x\right)\right) .$

Hence, again in some examples, depending on the formulas used, the calibration apparatus 110 can estimate the initial orientation components r2 of the second transformation TBC based on at least some of
the distant object's position in the second camera B,
the image resolution of the second camera B resb,
the second focal length, and
the distant object's position in the third camera C,
the image resolution of the third camera C,
the third focal length,
the object distance D,
the third measure A'B',
the seventh measure hAC-B,
the second angle measure vB, and
the third angle measure vC.

### Action A200

The calibration apparatus 110 estimates initial second translation components t2 of the second transformation TBC based on
the third measure A'B' defining a radius of an imaginary circle centered at camera B,
the second measure A'L defining a radius of an imaginary circle centered at the second marker L,
the fifth measure B'L, and
the seventh measure hAC-B.

While it is assumed that the center points of the two imaginary circles and the radii make the two imaginary circles intersect, the translation difference between the center points can be determined by solving a second-degree equation. If choosing the second or third coordinate system as the reference, then the initial second translation components t2.x, t2.z. can be approximated with the components of the translation difference. The second-degree equation can be solved in numerous known manners.

The seventh measure hAC-B can be used as initial estimate of a translation component t2.y of the second transformation.

Now referring to Figure 6, as an example of how to obtain the initial second translation components t2.x and t2.z by finding the intersections between the two imaginary circles. Again, recall that the first and third cameras A, C can be considered to be located at the same position.

The calibration apparatus 110 can define a first imaginary circle c1, being centered at a point B' defined by a projection of an optical center of the second camera B at the ground plane G and having a radius defined by the third measure A'B', and a second imaginary circle c2, being centered at the second marker L and having a radius defined by the second measure A'L. In more detail, the first and second circles c1, c2 are parallel with the ground plane G.

The calibration apparatus 110 can then determine a first intersection i1 and a second intersection i2 between the first and second circles c1, c2, e.g. by solving a second-degree equation.

Next, the calibration apparatus 110 can select one of the first and second intersections i1, i2 as a position of the third camera C on the ground plane based on a comparison between 1) the first measure A'R and a first distance i1R between the first intersection i1 and the first marker R and between 2) the first measure A'R and a second distance i2R between the second intersection i2 and the first marker R.

Further, the calibration apparatus 110 can estimate the second translation components t2.x and t2.z of the second transformation based on at least the selected intersection and the first marker R.

It may be concluded that the position A' of the third camera C on the plane ground G must have the same position as i1 or i2. There are then two possible solutions. The correct solution (i) is chosen by calculating the distance to R from both the first and second intersections i1, i2 and comparing those distances with the measured distance A'L. This yields an estimation of t2.x and t2.z.

In some examples, depending on the formulas used, the calibration apparatus 110 can estimate the initial second translation components t2 of the second transformation TBC based on at least some of
the third measure A'B' defining a radius of an imaginary circle centered at camera B,
the second measure A'L defining a radius of an imaginary circle centered at the second marker L,
the fifth measure B'L, and
the seventh measure hAC-B.

### Action A210

Since the initial estimates of the translation and orientation components t2, r2 of the second transformation TBC now have been set, improvements thereof can be achieved by iteration under constraints.

The calibration apparatus 110 iteratively determines updated orientation and translation components for the second transformation TBC and an updated second focal length under a second constraint that a second reprojection error for at least one reprojection point in the second and third fields of view satisfies a second condition for allowed reprojection error.

In some examples, the calibration apparatus 110 can perform the iteratively determining of the updated orientation and translation components for the second transformation and the updated second focal length by solving a second mathematical equation system including orientation and translation components, e.g. as initially estimated but at least one thereof being adjusted in each iteration, of the second transformation and the second focal length while satisfying the second constraint, thereby obtaining the updated orientation and translation components for the second transformation and the updated second focal length.

Expressed differently, as an example, with the initial estimations of t2, r2 and f'b, the second transformation between the second camera B and the third camera C is created. The quality of any estimation of t2, r2 and f'b can be evaluated by comparing estimated positions of, e.g., a reprojection point or the like, and actual, or detected, positions of the reprojection point(s). The quality can be measured as the sum of all reprojection errors obtain with the third transformation. An optimization problem for t2, r2 and f'b, is formulated, where a cost function is a weighted sum of all reprojection error(s). As an example, a known gradient descend procedure may be used to find a solution to the optimization problem. Gradient descent procedures are well-known in related mathematical literature and refers to a first-order iterative optimization algorithm for finding a local minimum of a differentiable function.

In more detail, a number of reprojection points, or calibration points, can vary, but there can preferably be two, three or more reprojection points.

If the number of reprojection points is at least three, then the iteratively determining can improve at least the estimates of the orientation components r2 and the second focal length, but if the number of reprojection points is less than three, then the iteratively determining can only improve the estimates of the orientation components r2.x and r2.y and the second focal length. However, regardless the number of reprojection points, given that the first and second markers R, L in the second and third fields of view, the iteratively determining can improve at least the estimates of the translation components t2, e.g. in three dimensions.

### Action A220

The calibration apparatus 110 estimates initial first orientation components r1 for the first transformation based on the updated second orientation components r2 and the updated third orientation components r3.

### Action A230

The calibration apparatus 110 estimates initial translation components t1 for the first transformation based on the updated second translation components t2. Again, it can be recalled that initial translation components t3 were estimated to be zero.

### Action A240

The calibration apparatus 110 iteratively determines at least updated orientation components for the first transformation and a further updated second focal length under a first constraint that a first reprojection error for at least one reprojection point in the first and second fields of view satisfies a first condition for allowed reprojection error.

In some examples, the calibration apparatus 110 can perform the iteratively determining of at least the updated orientation components for the first transformation and the further updated second focal length by solving a first mathematical equation system including orientation and translation components of the first transformation and the second focal length while satisfying the first constraint, thereby obtaining said at least updated orientation components for the first transformation and the further updated second focal length.

Expressed differently, as an example, with the initial estimations of t1, r1 and f'b, the first transformation between the first camera A and the second camera B is created. The quality of any estimation of t1, r1 and f'b can be evaluated by comparing estimated positions of, e.g., a reprojection point or the like, and actual, or detected, positions of the reprojection point(s). The quality can be measured as the sum of all reprojection errors obtain with the first transformation. An optimization problem for r1 and f'b, is formulated, where a cost function is a weighted sum of all reprojection error(s). As an example, a known gradient descend procedure may be used to find a solution to the optimization problem. Gradient descent procedures are well-known in related mathematical literature and refers to a first-order iterative optimization algorithm for finding a local minimum of a differentiable function.

Hence, there are final estimations of t1, r1 and f'b that that be used for transforming any coordinate in the first coordinate system to a transformed coordinate in the second coordinate system, such as a tracking trace in the first coordinate system to a transformed tracking trace in the second coordinate system. The transformed tracking trace can then be rendered in a video stream from the second camera B.

In more detail, a number of reprojection points, or calibration points, can vary, but there can preferably be two, three or more reprojection points.

If the number of reprojection points is at least three, then the iteratively determining can improve at least the estimates of the orientation components r1 and the second focal length, but if the number of reprojection points is less than three, then the iteratively determining can only improve the estimates of the orientation components r1.x and r1.y and the second focal length.

It can here be noted that actions A310, A320 and A330 are described as being performed by the calibration apparatus 110. However, these actions can be performed by one or more further computer devices (not shown).

### Action A310

The calibration apparatus 110 can receive, from the first camera A, a tracking stream relating to a tracked object 120. As an example, the tracking stream includes information for generating a tracking trace relating to the tracked object 120.

The tracking stream can include one or more of image frames captured by the first camera A, tracking data, blob information, paths, tracks, radar data, or the like.

The tracked object 120 can be a sports projectile, such as a golf ball, table tennis ball, a football, a soccer ball, a tennis ball, badminton ball, or the like.

The tracked object 120 can move in a three-dimensional environment in the fields of view of the first camera A and the second camera B.

A path of the tracked object 120 is captured by the first camera A. The tracking stream can include one or more of image frames captured by the first camera A, tracking data, blob information, paths, tracks, radar data or the like.

### Action A320

The calibration apparatus 110 can receive a video stream from the second camera B. Accordingly, the video stream is captured by the second camera B.

### Action A330

The calibration apparatus 110 may render the tracking trace relating to the tracked object 120 in the video stream based on the tracking stream, while using the first transformation. Any procedure for generating the tracking trace based on the tracking stream can used, e.g. before or in combination with action A330.

In this manner, the final estimations can be used to transform a tracking trace in the coordinate system of the first camera A to a transformed tracking trace in the coordinate system of the second camera B, i.e. the same coordinate system as the video stream. Next, the tracking trace can be rendered in the video stream. As a result, the experience of the video stream is enhanced for viewers of the video stream.

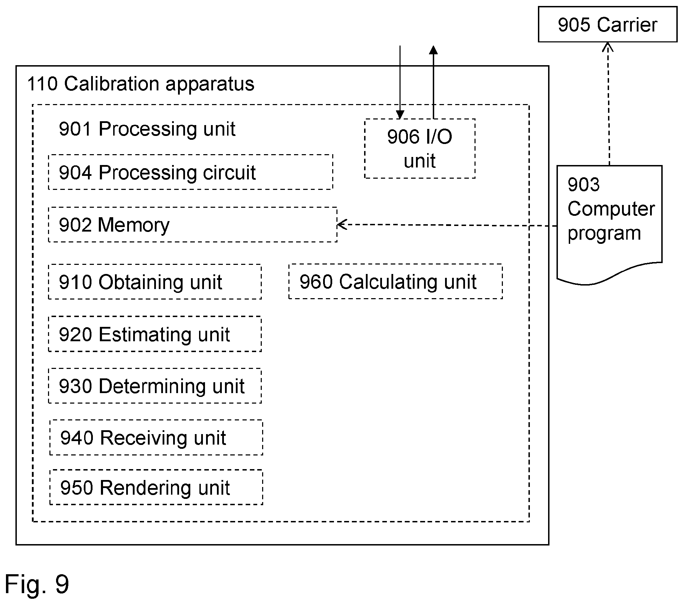

With reference to Figure 9, a schematic block diagram of embodiments of the calibration apparatus 110 of Figure 1 is shown.

The calibration apparatus 110 can include a processing unit 901 for performing the methods described herein. The processing unit can be embodied in the form of one or more hardware units and/or one or more software units. The term "unit" may thus refer to a circuit, a software block or the like according to various embodiments as described below.

The calibration apparatus 110 may further include a memory 902. The memory can include, such as contain or store, instructions, e.g., in the form of a computer program 903, which can include computer readable code units.

According to some embodiments herein, the calibration apparatus 110 and/or the processing unit 901 includes a processing circuit 904 as an exemplifying hardware unit, which can include one or more processors. Accordingly, the processing unit 901 may be embodied in the form of, or 'realized by', the processing circuit 904. The instructions may be executable by the processing circuit 904, whereby the calibration apparatus 110 is operative to perform the methods of Figure 3. As another example, the instructions, when executed by the calibration apparatus 110 and/or the processing circuit 904, may cause the calibration apparatus 110 to perform the method according to Figure 3.

In view of the above, in one example, there is provided a calibration apparatus 110 configured for determining a first transformation (TAB) between a first coordinate system of a first camera (A) and a second coordinate system of a second camera (B). As mentioned, the first and second cameras (A, B) are spaced away from each other and located above a ground plane (G, xz-plane), wherein a first field of view of the first camera (A) at least partially overlaps with a second field of view of the second camera (B), wherein a third camera (C) has a third field of view partially overlapping with the first and second fields of view, wherein the third camera's (C) position and the first camera's (A) position are approximated to be equal, wherein a distant object (P) is present in the first, second and third fields of view and located at an object distance (D) from a location (AB) at at least one of the first camera (A), the second camera (B), and the third camera (C), preferably at the first camera (A), wherein a first marker (R) and a second marker (L) are located at the ground plane (G) and the first and second markers (R, L) are visible in the second and third fields of view, wherein a second transformation (TBC) refers to transformation between the second coordinate system of the second camera (B) and a third coordinate system of the third camera (C), wherein a third transformation (TAC) refers to transformation between the first coordinate system of the first camera (A) and the third coordinate system of the third camera (C), wherein the first camera (A) has a first focal length, wherein a first measure (A'R) indicates a first distance, projected on the ground plane (G), between the first marker (R) and at least one of the first camera (A) and the third camera (C), wherein a second measure (A'L) indicates a second distance, projected on the ground plane (G), between the second marker (L) and at least one of the first camera (A) and the third camera (C), wherein a third measure (A'B') indicates a third distance, projected on the ground plane (G), between the second camera (B) and at least one of the first camera (A) and the third camera (C), wherein a fourth measure (B'R) indicates a fourth distance, projected on the ground plane (G), between the second camera (B) and the first marker (R), wherein a fifth measure (B'L) indicates a fifth distance, projected on the ground plane (G), between the second camera (B) and the second marker (L), wherein a sixth measure (RL) indicates a sixth distance, projected on the ground plane (G), between the first marker (R) and the second marker (L), wherein a seventh measure (hAC-B) indicates a seventh distance indicating difference in height between the second camera (B) and at least one of the first and third cameras (A, C), wherein a first angle measure (vA) indicates a feature angle identified in a first image plane representing the first field of view, wherein a second angle measure (vB) indicates the feature angle identified in a second image plane representing the second field of view, wherein a third angle measure (vC) indicates the feature angle identified in a third image plane representing the third field of view. Again, the memory 902 contains the instructions executable by said processing circuit 904 whereby the calibration apparatus 110 is operative for:
estimating A140 a third focal length of the third camera C based on
   the first measure A'R,
   the second measure A'L,
   a third position of the first marker R in the third field of view,
   a fourth position of the second marker L in the third field of view,
   the sixth measure RL, and
   an image resolution of the third camera C,
estimating A150 initial orientation components r3 of the third transformation TAC based on
   the distant object's P position in the first camera A,
   an image resolution of the first camera A,
   the first focal length,
   the distant object's P position in the third camera C,
   the image resolution of the third camera C,
   the third focal length,
   the object distance D,
   the first angle measure vA, and
   the third angle measure vC,
estimating A160 initial translation components t3 of the third transformation TAC to be zero,
iteratively determining A170 updated orientation components of the third transformation TAC and an updated third focal length under a third constraint that a third reprojection error for at least one reprojection point in the first and third fields of view satisfies a third condition for allowed reprojection error,
estimating A180 a second focal length of the second camera B based on
   the fourth measure B'R,
   the fifth measure B'L,
   a first position of the first marker R in the second field of view,
   a second position of the second marker L in the second field of view,
   the sixth measure RL, and
   an image resolution of the second camera B,
estimating A190 initial orientation components r2 of the second transformation TBC based on
   the distant object's position in the second camera B,
   an image resolution of the second camera B,
   the second focal length, and
   the distant object's position in the third camera C,
   an image resolution of the third camera C,
   the third focal length,
   the object distance D,
   the third measure A'B',
   the seventh measure hAC-B,
   the second angle measure vB, and
   the third angle measure vC,
estimating A200 initial second translation components t2 of the second transformation TBC based on
   the third measure A'B' defining a radius of an imaginary circle centered at camera B,
   the second measure A'L defining a radius of an imaginary circle centered at the second marker L,
   the fifth measure B'L, and
   the seventh measure hAC-B,
iteratively determining A210 updated orientation and translation components for the second transformation and an updated second focal length under a second constraint that a second reprojection error for at least one reprojection point in the second and third fields of view satisfies a second condition for allowed reprojection error,
estimating A220 initial first orientation components for the first transformation based on the updated second orientation components and the updated third orientation components,
estimating A230 initial translation components for the first transformation based on the updated second translation components,
iteratively determining A240 at least updated orientation components for the first transformation and a further updated second focal length under a first constraint that a first reprojection error for at least one reprojection point in the first and second fields of view satisfies a first condition for allowed reprojection error.

Figure 9 further illustrates a carrier 905, or program carrier, which provides, such as comprises, mediates, supplies and the like, the computer program 903 as described directly above. The carrier 905 may be one of an electronic signal, an optical signal, a radio signal and a computer readable medium.

In some embodiments, the calibration apparatus 110 and/or the processing unit 901 may comprise one or more of an obtaining unit 910, an estimating unit 920, a determining unit 930, a receiving unit 940, a rendering unit 950, a calculating unit 960, as exemplifying hardware units. The term "unit" may refer to a circuit when the term "unit" refers to a hardware unit. In other examples, one or more of the aforementioned exemplifying hardware units may be implemented as one or more software units.

Moreover, the calibration apparatus 110 and/or the processing unit XX01 may comprise an Input/Output unit 906, which may be exemplified by the receiving unit and/or the sending unit when applicable.

Accordingly, the calibration apparatus 110 is configured determining a first transformation TAB between a first coordinate system of a first camera A and a second coordinate system of a second camera B. The first and second cameras A, B are spaced away from each other and located above a ground plane G, xz-plane. A first field of view of the first camera A at least partially overlaps with a second field of view of the second camera B. A third camera C has a third field of view partially overlapping with the first and second fields of view. The third camera's C position and the first camera's A position are approximated to be equal, e.g. in the first coordinate system, e.g. the third camera C is considered to have same position/translation as the first camera A, but it can have different orientation as compared to the first camera A. A distant object P is present in the first, second and third fields of view and located at an object distance D from a location AB at at least one of the first camera A, the second camera B, and the third camera C, preferably at the first camera A. A first marker R and a second marker L are located at the ground plane G and the first and second markers R, L are visible in the second and third fields of view. A second transformation TBC refers to transformation between the second coordinate system of the second camera B and a third coordinate system of the third camera C. A third transformation TAC refers to transformation between the first coordinate system of the first camera A and the third coordinate system of the third camera C. The first camera A has a first focal length. A first measure A'R indicates a first distance, projected on the ground plane G, between the first marker R and at least one of the first camera A and the third camera C. A second measure A'L indicates a second distance, projected on the ground plane G, between the second marker L and at least one of the first camera A and the third camera C. A third measure A'B' indicates a third distance, projected on the ground plane G, between the second camera B and at least one of the first camera A and the third camera C. A fourth measure B'R indicates a fourth distance, projected on the ground plane G, between the second camera B and the first marker R. A fifth measure B'L indicates a fifth distance, projected on the ground plane G, between the second camera B and the second marker L. A sixth measure RL indicates a sixth distance, projected on the ground plane G, between the first marker R and the second marker L. A seventh measure hAC-B indicates a seventh distance indicating difference in height between the second camera B and at least one of the first and third cameras A, C. A first angle measure vA indicates a feature angle identified in a first image plane representing the first field of view. A second angle measure vB indicates the feature angle identified in a second image plane representing the second field of view. A third angle measure vC indicates the feature angle identified in a third image plane representing the third field of view.

Therefore, according to the various embodiments described above, the calibration apparatus 110 and/or the processing unit 901 and/or the estimating unit 920 is configured for estimating a third focal length of the third camera C based on
the first measure A'R,
the second measure A'L,
a third position of the first marker R in the third field of view,
a fourth position of the second marker L in the third field of view,
the sixth measure RL, and
an image resolution of the third camera C.

The calibration apparatus 110 and/or the processing unit 901 and/or the estimating unit 920 is configured for estimating initial orientation components r3 of the third transformation TAC based on
the distant object's P position in the first camera A, i.e. a position, in the first camera A, of the distant object P,
an image resolution of the first camera A,
the first focal length,
the distant object's P position in the third camera C,
the image resolution of the third camera C,
the third focal length,
the object distance D,
the first angle measure vA, and
the third angle measure vC.

The calibration apparatus 110 and/or the processing unit 901 and/or the estimating unit 920 is configured for estimating initial translation components t3 of the third transformation TAC to be zero.

The calibration apparatus 110 and/or the processing unit 901 and/or the determining unit 930 is configured for iteratively determining updated orientation components of the third transformation TAC and an updated third focal length under a third constraint that a third reprojection error for at least one reprojection point in the first and third fields of view satisfies a third condition for allowed reprojection error.

The calibration apparatus 110 and/or the processing unit 901 and/or the estimating unit 920 is configured for estimating a second focal length of the second camera B based on
the fourth measure B'R,
the fifth measure B'L,
a first position of the first marker R in the second field of view,
a second position of the second marker L in the second field of view,
the sixth measure RL, and
an image resolution of the second camera B.

The calibration apparatus 110 and/or the processing unit 901 and/or the estimating unit 920 is configured for estimating initial orientation components r2 of the second transformation TBC based on
the distant object's position in the second camera B,
an image resolution of the second camera B,
the second focal length,
the distant object's position in the third camera C,
an image resolution of the third camera C,
the third focal length,
the object distance D,
the third measure A'B',
the seventh measure hAC-B,
the second angle measure vB, and
the third angle measure vC.

The calibration apparatus 110 and/or the processing unit 901 and/or the estimating unit 920 is configured for estimating initial second translation components t2 of the second transformation TBC based on
the third measure A'B' defining a radius of an imaginary circle centered at camera B,
the second measure A'L defining a radius of an imaginary circle centered at the second marker L,
the fifth measure B'L, and
the seventh measure hAC-B.

The calibration apparatus 110 and/or the processing unit 901 and/or the determining unit 930 is configured for iteratively determining updated orientation and translation components for the second transformation and an updated second focal length under a second constraint that a second reprojection error for at least one reprojection point in the second and third fields of view satisfies a second condition for allowed reprojection error.

The calibration apparatus 110 and/or the processing unit 901 and/or the estimating unit 920 is configured for estimating initial first orientation components for the first transformation based on the updated second orientation components and the updated third orientation components.

The calibration apparatus 110 and/or the processing unit 901 and/or the estimating unit 920 is configured for estimating initial translation components for the first transformation based on the updated second translation components.

The calibration apparatus 110 and/or the processing unit 901 and/or the determining unit 930 is configured for iteratively determining at least updated orientation components for the first transformation and a further updated second focal length under a first constraint that a first reprojection error for at least one reprojection point in the first and second fields of view satisfies a first condition for allowed reprojection error.

The calibration apparatus 110 and/or the processing unit 901 and/or the obtaining unit 910 may be configured for obtaining a set of measures comprising at least five of:
the first measure A'R,
the second measure A'L,
the third measure A'B',
the fourth measure B'R,
the fifth measure B'L, or
the sixth measure RL,
wherein when the set of measures comprises all but one measure of the first, second, third, fourth, fifth and sixth measures, the calibration apparatus 110 and/or the processing unit 901 and/or the calculating unit 960 may be configured for calculating said one measure based on the set of measures.

The calibration apparatus 110 and/or the processing unit 901 and/or the obtaining unit 910 may be configured for obtaining the seventh measure, the first angle measure vA, the second angle measure vB, and the third angle measure vC.

The calibration apparatus 110 and/or the processing unit 901 and/or the obtaining unit 910 may be configured for obtaining the object distance D.

The calibration apparatus 110 and/or the processing unit 901 and/or the determining unit 930 may be configured for iteratively determining the updated orientation components of the third transformation TAC and the updated third focal length by solving a third mathematical equation system dependent on the orientation components, and optionally translation components, of the third transformation and the third focal length while satisfying the third constraint, thereby obtaining the updated orientation components for the third transformation and the updated third focal length.

The calibration apparatus 110 and/or the processing unit 901 and/or the determining unit 930 may be configured for iteratively determining the updated orientation and translation components for the second transformation and the updated second focal length by solving a second mathematical equation system dependent on the orientation and translation components of the second transformation and the second focal length while satisfying the second constraint, thereby obtaining the updated orientation and translation components for the second transformation and the updated second focal length.

The calibration apparatus 110 and/or the processing unit 901 and/or the determining unit 930 may be configured for iteratively determining said at least updated orientation components for the first transformation and the further updated second focal length by solving a first mathematical equation system dependent on the orientation and translation components of the first transformation and the second focal length while satisfying the first constraint, thereby obtaining said at least updated orientation components for the first transformation and the further updated second focal length.

The calibration apparatus 110 and/or the processing unit 901 and/or the receiving unit 940 may be configured for receiving, from the first camera A, a tracking stream relating to a tracked object 120. The tracking stream includes information for generating a tracking trace. The tracking stream can include one or more of image frames captured by the first camera A, tracking data, blob information, paths, tracks or the like.

The calibration apparatus 110 and/or the processing unit 901 and/or the receiving unit 940 may be configured for receiving a video stream from the second camera B.

The calibration apparatus 110 and/or the processing unit 901 and/or the rendering unit 950 may be configured for rendering the tracking trace relating to the tracked object 120 in the video stream based on the tracking stream, while using the first transformation.

The calibration apparatus 110 and/or the processing unit 901 and/or the calculating unit 960 may be configured for calculating a two-dimensional sensor size of the first, second and third camera, respectively, based on the image resolution of the first, second and third camera, respectively, and/or
the calibration apparatus 110 and/or the processing unit 901 and/or the calculating unit 960 may be configured for calculating an aspect ratio of images captured by the first, second and third camera, respectively, based on the image resolution of the first, second and third camera, respectively.

The calibration apparatus 110 and/or the processing unit 901 and/or the obtaining unit 910 may be configured for obtaining the first focal length of the first camera A.

In the examples above, any one of the units may include one or more further units, or may be separated into multiple units. E.g. "the estimating unit" can refer to the aforementioned estimating unit or one or more further estimating units (not shown), etc. for any one of the further units mentioned, implicitly or explicitly herein.

As used herein, the term "unit" may refer to one or more functional units, each of which may be implemented as one or more hardware units and/or one or more software units and/or a combined software/hardware unit in a node. In some examples, the unit may represent a functional unit realized as software and/or hardware of the node.

As used herein, the term "computer program carrier", "program carrier", or "carrier", may refer to one of an electronic signal, an optical signal, a radio signal, and a computer readable medium. In some examples, the computer program carrier may exclude transitory, propagating signals, such as the electronic, optical and/or radio signal. Thus, in these examples, the computer program carrier may be a non-transitory carrier, such as a non-transitory computer readable medium.

As used herein, the term "processing unit" can include one or more hardware units, one or more software units or a combination thereof.

As used herein, the term "software unit" may refer to a software application, a Dynamic Link Library (DLL), a software component, a software module, a software object, a React component, an object according to Component Object Model (COM), a software function, a software engine, an executable binary software file or the like.

The terms "processing unit" or "processing circuit" may herein comprise one or more processors, an Application Specific Integrated Circuit (ASIC), a Field-Programmable Gate Array (FPGA) or the like. The processing circuit or the like may comprise one or more processor kernels.

As used herein, the expression "configured to/for" may mean that a processing circuit is configured to, such as adapted to or operative to, by means of software configuration and/or hardware configuration, perform one or more of the actions described herein.

As used herein, the term "action" may refer to an action, a step, an operation, a response, a reaction, an activity or the like. It shall be noted that an action herein may be split into two or more sub-actions as applicable. Moreover, also as applicable, it shall be noted that two or more of the actions described herein may be merged into a single action.

As used herein, the term "memory" may refer to a hard disk, a magnetic storage medium, a portable computer diskette or disc, flash memory, random access memory (RAM) or the like. Furthermore, the term "memory" may refer to an internal register memory of a processor or the like.

As used herein, the term "computer readable medium" may be a Universal Serial Bus (USB) memory, a Digital Versatile Disc (DVD), a Blu-ray disc, a software unit that is received as a stream of data, a Flash memory, a hard drive, a memory card, such as a MemoryStick, a Multimedia Card (MMC), Secure Digital (SD) card, etc. One or more of the aforementioned examples of computer readable medium may be provided as one or more computer program products.

As used herein, the term "computer readable code units" may be text of a computer program, parts of or an entire binary file representing a computer program in a compiled format or anything there between.

## Claims

1. A method, performed by a calibration apparatus (110), for determining a first transformation (TAB) between a first coordinate system of a first camera (A) and a second coordinate system of a second camera (B), wherein the first and second cameras (A, B) are spaced away from each other and located above a ground plane (G, xz-plane), wherein a first field of view of the first camera (A) at least partially overlaps with a second field of view of the second camera (B), wherein a third camera (C) has a third field of view partially overlapping with the first and second fields of view, wherein the third camera's (C) position and the first camera's (A) position are approximated to be equal, wherein a distant object (P) is present in the first, second and third fields of view and located at an object distance (D) from a location (AB) at at least one of the first camera (A), the second camera (B), and the third camera (C), wherein a first marker (R) and a second marker (L) are located at the ground plane (G) and the first and second markers (R, L) are visible in the second and third fields of view, wherein a second transformation (TBC) refers to transformation between the second coordinate system of the second camera (B) and a third coordinate system of the third camera (C), wherein a third transformation (TAC) refers to transformation between the first coordinate system of the first camera (A) and the third coordinate system of the third camera (C), wherein the first camera (A) has a first focal length, wherein a first measure (A'R) indicates a first distance, projected on the ground plane (G), between the first marker (R) and at least one of the first camera (A) and the third camera (C), wherein a second measure (A'L) indicates a second distance, projected on the ground plane (G), between the second marker (L) and at least one of the first camera (A) and the third camera (C), wherein a third measure (A'B') indicates a third distance, projected on the ground plane (G), between the second camera (B) and at least one of the first camera (A) and the third camera (C), wherein a fourth measure (B'R) indicates a fourth distance, projected on the ground plane (G), between the second camera (B) and the first marker (R), wherein a fifth measure (B'L) indicates a fifth distance, projected on the ground plane (G), between the second camera (B) and the second marker (L), wherein a sixth measure (RL) indicates a sixth distance, projected on the ground plane (G), between the first marker (R) and the second marker (L), wherein a seventh measure (hAC-B) indicates a seventh distance indicating difference in height between the second camera (B) and at least one of the first and third cameras (A, C), wherein a first angle measure (vA) indicates a feature angle identified in a first image plane representing the first field of view, wherein a second angle measure (vB) indicates the feature angle identified in a second image plane representing the second field of view, wherein a third angle measure (vC) indicates the feature angle identified in a third image plane representing the third field of view, wherein the method comprises:
estimating (A140) a third focal length of the third camera (C) based on
the first measure (A'R),
the second measure (A'L),
a third position of the first marker (R) in the third field of view,
a fourth position of the second marker (L) in the third field of view,
the sixth measure (RL), and
an image resolution of the third camera (C),
estimating (A150) initial orientation components (r3) of the third transformation (TAC) based on
the distant object's (P) position in the first camera (A),
an image resolution of the first camera (A),
the first focal length,
the distant object's (P) position in the third camera (C),
the image resolution of the third camera (C),
the third focal length,
the object distance (D),
the first angle measure (vA), and
the third angle measure (vC),
estimating (A160) initial translation components (t3) of the third transformation (TAC) to be zero,
iteratively determining (A170) updated orientation components of the third transformation (TAC) and an updated third focal length under a third constraint that a third reprojection error for at least one reprojection point in the first and third fields of view satisfies a third condition for allowed reprojection error,
estimating (A180) a second focal length of the second camera (B) based on
the fourth measure (B'R),
the fifth measure (B'L),
a first position of the first marker (R) in the second field of view,
a second position of the second marker (L) in the second field of view, the sixth measure (RL), and
an image resolution of the second camera (B),
estimating (A190) initial orientation components (r2) of the second transformation (TBC) based on
the distant object's position in the second camera (B),
an image resolution of the second camera (B),
the second focal length, and
the distant object's position in the third camera (C),
an image resolution of the third camera (C),
the third focal length,
the object distance (D),
the third measure (A'B'),
the seventh measure (hAC-B),
the second angle measure (vB), and
the third angle measure (vC),
estimating (A200) initial second translation components (t2) of the second transformation (TBC) based on
the third measure (A'B') defining a radius of an imaginary circle centered at camera B,
the second measure (A'L) defining a radius of an imaginary circle centered at the second marker L,
the fifth measure (B'L), and
the seventh measure (hAC-B),
iteratively determining (A210) updated orientation and translation components for the second transformation (TBC) and an updated second focal length under a second constraint that a second reprojection error for at least one reprojection point in the second and third fields of view satisfies a second condition for allowed reprojection error,
estimating (A220) initial first orientation components for the first transformation (TAB) based on the updated second orientation components and the updated third orientation components,
estimating (A230) initial translation components for the first transformation (TAB) based on the updated second translation components,
iteratively determining (A240) at least updated orientation components for the first transformation (TAB) and a further updated second focal length under a first constraint that a first reprojection error for at least one reprojection point in the first and second fields of view satisfies a first condition for allowed reprojection error.

2. The method according to claim 1, wherein the method comprises:
obtaining (A110), by receiving as user input or from a memory accessible by the calibration apparatus (110), a set of measures comprising at least five of:
the first measure (A'R),
the second measure (A'L),
the third measure (A'B'),
the fourth measure (B'R),
the fifth measure (B'L), or
the sixth measure (RL),
wherein when the set of measures comprises all but one measure of the first, second, third, fourth, fifth and sixth measures, calculating said one measure based on the set of measures, and
obtaining (A115) , by receiving as user input or from a memory accessible by the calibration apparatus (110), the seventh measure, the first angle measure (vA), the second angle measure (vB), and the third angle measure (vC).

3. The method according to any one of the preceding claims, wherein the method comprises obtaining (A120), by receiving as user input or from a memory accessible by the calibration apparatus (110), the object distance (D).

4. The method according to any one of the preceding claims, wherein the iteratively determining (A170) of the updated orientation components of the third transformation (TAC) and the updated third focal length is performed by solving a third mathematical equation system dependent on the orientation components, and optionally translation components, of the third transformation (TAC) and the third focal length while satisfying the third constraint.

5. The method according to any one of the preceding claims, wherein the iteratively determining (A210) of the updated orientation and translation components for the second transformation (TBC) and the updated second focal length is performed by solving a second mathematical equation system dependent on the orientation and translation components of the second transformation (TBC) and the second focal length while satisfying the second constraint.

6. The method according to any one of the preceding claims, wherein the iteratively determining (A240) of said at least updated orientation components for the first transformation (TAB) and the further updated second focal length is performed by solving a first mathematical equation system dependent on the orientation and translation components of the first transformation (TAB) and the second focal length while satisfying the first constraint.

7. The method according to any one of the preceding claims, wherein the method comprises:
receiving (A310), from the first camera (A), a tracking stream relating to a tracked object (120), wherein the tracking stream includes information for generating a tracking trace, wherein the tracking stream can include one or more of image frames captured by the first camera (A), tracking data, blob information, paths, or tracks,
receiving (A320) a video stream from the second camera (B),
rendering (A330) the tracking trace relating to the tracked object (120) in the video stream based on the tracking stream, while using the first transformation (TAB).

8. The method according to any one of the preceding claims, wherein the method comprises
calculating (130) a two-dimensional sensor size of the first, second and third camera, respectively, based on the image resolution of the first, second and third camera, respectively, and/or
calculating (135) an aspect ratio of images captured by the first, second and third camera, respectively, based on the image resolution of the first, second and third camera, respectively.

9. The method according to any one of the preceding claims, wherein the method comprises obtaining (A125), by receiving as user input or from a memory accessible by the calibration apparatus (110), the first focal length of the first camera (A).

10. A calibration apparatus (110) configured for determining a first transformation (TAB) between a first coordinate system of a first camera (A) and a second coordinate system of a second camera (B), wherein the first and second cameras (A, B) are spaced away from each other and located above a ground plane (G, xz-plane), wherein a first field of view of the first camera (A) at least partially overlaps with a second field of view of the second camera (B), wherein a third camera (C) has a third field of view partially overlapping with the first and second fields of view, wherein the third camera's (C) position and the first camera's (A) position are approximated to be equal, wherein a distant object (P) is present in the first, second and third fields of view and located at an object distance (D) from a location (AB) at at least one of the first camera (A), the second camera (B), and the third camera (C), preferably at the first camera (A), wherein a first marker (R) and a second marker (L) are located at the ground plane (G) and the first and second markers (R, L) are visible in the second and third fields of view, wherein a second transformation (TBC) refers to transformation between the second coordinate system of the second camera (B) and a third coordinate system of the third camera (C), wherein a third transformation (TAC) refers to transformation between the first coordinate system of the first camera (A) and the third coordinate system of the third camera (C), wherein the first camera (A) has a first focal length, wherein a first measure (A'R) indicates a first distance, projected on the ground plane (G), between the first marker (R) and at least one of the first camera (A) and the third camera (C), wherein a second measure (A'L) indicates a second distance, projected on the ground plane (G), between the second marker (L) and at least one of the first camera (A) and the third camera (C), wherein a third measure (A'B') indicates a third distance, projected on the ground plane (G), between the second camera (B) and at least one of the first camera (A) and the third camera (C), wherein a fourth measure (B'R) indicates a fourth distance, projected on the ground plane (G), between the second camera (B) and the first marker (R), wherein a fifth measure (B'L) indicates a fifth distance, projected on the ground plane (G), between the second camera (B) and the second marker (L), wherein a sixth measure (RL) indicates a sixth distance, projected on the ground plane (G), between the first marker (R) and the second marker (L), wherein a seventh measure (hAC-B) indicates a seventh distance indicating difference in height between the second camera (B) and at least one of the first and third cameras (A, C), wherein a first angle measure (vA) indicates a feature angle identified in a first image plane representing the first field of view, wherein a second angle measure (vB) indicates the feature angle identified in a second image plane representing the second field of view, wherein a third angle measure (vC) indicates the feature angle identified in a third image plane representing the third field of view, wherein the calibration apparatus (110) is configured for:
estimating a third focal length of the third camera (C) based on
the first measure (A'R),
the second measure (A'L),
a third position of the first marker (R) in the third field of view,
a fourth position of the second marker (L) in the third field of view,
the sixth measure (RL), and
an image resolution of the third camera (C),
estimating initial orientation components (r3) of the third transformation (TAC) based on
the distant object's (P) position in the first camera (A),
an image resolution of the first camera (A),
the first focal length,
the distant object's (P) position in the third camera (C),
the image resolution of the third camera (C),
the third focal length,
the object distance (D),
the first angle measure (vA), and
the third angle measure (vC),
estimating initial translation components (t3) of the third transformation (TAC) to be zero,
iteratively determining updated orientation components of the third transformation (TAC) and an updated third focal length under a third constraint that a third reprojection error for at least one reprojection point in the first and third fields of view satisfies a third condition for allowed reprojection error,
estimating a second focal length of the second camera (B) based on
the fourth measure (B'R),
the fifth measure (B'L),
a first position of the first marker (R) in the second field of view,
a second position of the second marker (L) in the second field of view,
the sixth measure (RL), and
an image resolution of the second camera (B),
estimating initial orientation components (r2) of the second transformation (TBC) based on
the distant object's position in the second camera (B),
an image resolution of the second camera (B),
the second focal length, and
the distant object's position in the third camera (C),
an image resolution of the third camera (C),
the third focal length,
the object distance (D),
the third measure (A'B'),
the seventh measure (hAC-B),
the second angle measure (vB), and
the third angle measure (vC),
estimating initial second translation components (t2) of the second transformation (TBC) based on
the third measure (A'B') defining a radius of an imaginary circle centered at camera B,
the second measure (A'L) defining a radius of an imaginary circle centered at the second marker L,
the fifth measure (B'L), and
the seventh measure (hAC-B),
iteratively determining updated orientation and translation components for the second transformation (TBC) and an updated second focal length under a second constraint that a second reprojection error for at least one reprojection point in the second and third fields of view satisfies a second condition for allowed reprojection error,
estimating initial first orientation components for the first transformation (TAB) based on the updated second orientation components and the updated third orientation components,
estimating initial translation components for the first transformation (TAB) based on the updated second translation components,
iteratively determining at least updated orientation components for the first transformation (TAB) and a further updated second focal length under a first constraint that a first reprojection error for at least one reprojection point in the first and second fields of view satisfies a first condition for allowed reprojection error.

11. A computer program (903), comprising computer readable code units which when executed on a calibration apparatus (110) causes the calibration apparatus (110) to perform the method according to any one of claims 1-9.

12. A carrier (905) comprising the computer program according to the preceding claim, wherein the carrier (905) is one of an electronic signal, an optical signal, a radio signal and a computer readable medium.

13. A system (100) comprising a first camera (A), a second camera (B), a third camera (C) and a calibration apparatus (110) according to claim 10.

14. The system (100) according to the preceding claim, wherein the first camera (A) is a tracking sensor and/or the second camera (B) is a broadcast camera and/or the third camera (C) is a wide-angle still image camera.

## Patentansprüche

1. Verfahren, das von einer Kalibriervorrichtung (110) durchgeführt wird, zum Bestimmen einer ersten Transformation (TAB) zwischen einem ersten Koordinatensystem einer ersten Kamera (A) und einem zweiten Koordinatensystem einer zweiten Kamera (B), wobei die erste und die zweite Kamera (A, B) voneinander beabstandet und oberhalb einer Grundebene (G, xz-Ebene) angeordnet sind, wobei sich ein erstes Sichtfeld der ersten Kamera (A) zumindest teilweise mit einem zweiten Sichtfeld der zweiten Kamera (B) überschneidet, wobei eine dritte Kamera (C) ein drittes Sichtfeld aufweist, das sich teilweise mit dem ersten und dem zweiten Sichtfeld überschneidet, wobei die Position der dritten Kamera (C) und die Position der ersten Kamera (A) als näherungsweise gleich angenommen werden, wobei ein entferntes Objekt (P) im ersten, zweiten und dritten Sichtfeld vorhanden ist und einen Objektabstand (D) von einem Ort (AB) aufweist, der sich bei mindestens einer der ersten Kamera (A), der zweiten Kamera (B) und der dritten Kamera (C) befindet, wobei ein erster Marker (R) und ein zweiter Marker (L) auf der Grundebene (G) angeordnet sind und der erste und der zweite Marker (R, L) im zweiten und dritten Sichtfeld sichtbar sind, wobei eine zweite Transformation (TBC) eine Transformation zwischen dem zweiten Koordinatensystem der zweiten Kamera (B) und einem dritten Koordinatensystem der dritten Kamera (C) bezeichnet, wobei eine dritte Transformation (TAC) eine Transformation zwischen dem ersten Koordinatensystem der ersten Kamera (A) und dem dritten Koordinatensystem der dritten Kamera (C) bezeichnet, wobei die erste Kamera (A) eine erste Brennweite aufweist, wobei ein erstes Maß (A'R) einen ersten Abstand zwischen dem ersten Marker (R) und mindestens einer der ersten Kamera (A) und der dritten Kamera (C) angibt, der auf die Grundebene (G) projiziert ist, wobei ein zweites Maß (A'L) einen zweiten Abstand zwischen dem zweiten Marker (L) und mindestens einer der ersten Kamera (A) und der dritten Kamera (C) angibt, der auf die Grundebene (G) projiziert ist, wobei ein drittes Maß (A'B') einen dritten Abstand zwischen der zweiten Kamera (B) und mindestens einer der ersten Kamera (A) und der dritten Kamera (C) angibt, der auf die Grundebene (G) projiziert ist, wobei ein viertes Maß (B'R) einen vierten Abstand zwischen der zweiten Kamera (B) und dem ersten Marker (R) angibt, der auf die Grundebene (G) projiziert ist, wobei ein fünftes Maß (B'L) einen fünften Abstand zwischen der zweiten Kamera (B) und dem zweiten Marker (L) angibt, der auf die Grundebene (G) projiziert ist, wobei ein sechstes Maß (RL) einen sechsten Abstand zwischen dem ersten Marker (R) und dem zweiten Marker (L) angibt, der auf die Grundebene (G) projiziert ist, wobei ein siebtes Maß (hAC-B) einen siebten Abstand angibt, der einem Höhenunterschied zwischen der zweiten Kamera (B) und mindestens einer der ersten und dritten Kameras (A, C) entspricht, wobei ein erstes Winkelmaß (vA) einen Merkmalswinkel angibt, der in einer ersten Bildebene identifiziert ist und das erste Sichtfeld darstellt, wobei ein zweites Winkelmaß (vB) den Merkmalswinkel angibt, der in einer zweiten Bildebene identifiziert ist und das zweite Sichtfeld darstellt, wobei ein drittes Winkelmaß (vC) den Merkmalswinkel angibt, der in einer dritten Bildebene identifiziert ist und das dritte Sichtfeld darstellt, wobei das Verfahren umfasst:
Schätzen (A140) einer dritten Brennweite der dritten Kamera (C) auf der Grundlage
des ersten Maßes (A'R),
des zweiten Maßes (A'L),
einer dritten Position des ersten Markers (R) in dem dritten Sichtfeld,
einer vierten Position des zweiten Markers (L) in dem dritten Sichtfeld,
des sechsten Maßes (RL) und
einer Bildauflösung der dritten Kamera (C),
Schätzen (A150) anfänglicher Orientierungskomponenten (r3) der dritten Transformation (TAC) auf der Grundlage
der Position des entfernten Objekts (P) in der ersten Kamera (A),
einer Bildauflösung der ersten Kamera (A),
der ersten Brennweite,
der Position des entfernten Objekts (P) in der dritten Kamera (C),
der Bildauflösung der dritten Kamera (C),
der dritten Brennweite,
der Objektentfernung (D),
des ersten Winkelmaßes (vA) und
des dritten Winkelmaßes (vC),
Schätzen (A160) anfänglicher Translationskomponenten (t3) der dritten Transformation (TAC) als null,
iteratives Bestimmen (A170) aktualisierter Orientierungskomponenten der dritten Transformation (TAC) und einer aktualisierten dritten Brennweite unter einer dritten Nebenbedingung, gemäß der ein dritter Reprojektionsfehler für mindestens einen Reprojektionspunkt im ersten und dritten Sichtfeld eine dritte Bedingung für einen zulässigen Reprojektionsfehler erfüllt,
Schätzen (A180) einer zweiten Brennweite der zweiten Kamera (B) auf der Grundlage
des vierten Maßes (B'R),
des fünften Maßes (B'L),
einer ersten Position des ersten Markers (R) in dem zweiten Sichtfeld,
einer zweiten Position des zweiten Markers (L) in dem zweiten Sichtfeld,
des sechsten Maßes (RL) und
einer Bildauflösung der zweiten Kamera (B),
Schätzen (A190) anfänglicher Orientierungskomponenten (r2) der zweiten Transformation (TBC) auf der Grundlage
der Position des entfernten Objekts in der zweiten Kamera (B),
einer Bildauflösung der zweiten Kamera (B),
der zweiten Brennweite,
der Position des entfernten Objekts in der dritten Kamera (C),
einer Bildauflösung der dritten Kamera (C),
der dritten Brennweite,
der Objektentfernung (D),
des dritten Maßes (A'B'),
des siebten Maßes (hAC-B),
des zweiten Winkelmaßes (vB) und
des dritten Winkelmaßes (vC),
Schätzen (A200) anfänglicher zweiter Translationskomponenten (t2) der zweiten Transformation (TBC) auf der Grundlage
des dritten Maßes (A'B'), das den Radius eines imaginären Kreises definiert, dessen Mittelpunkt bei der Kamera B liegt,
des zweiten Maßes (A'L), das den Radius eines imaginären Kreises definiert, dessen Mittelpunkt bei dem zweiten Marker L liegt,
des fünften Maßes (B'L) und
des siebten Maßes (hAC-B),
iteratives Bestimmen (A210) aktualisierter Orientierungs- und Translationskomponenten für die zweite Transformation (TBC) sowie einer aktualisierten zweiten Brennweite unter einer zweiten Nebenbedingung, gemäß der ein zweiter Reprojektionsfehler für mindestens einen Reprojektionspunkt im zweiten und dritten Sichtfeld eine zweite Bedingung für einen zulässigen Reprojektionsfehler erfüllt,
Schätzen (A220) anfänglicher erster Orientierungskomponenten für die erste Transformation (TAB) auf der Grundlage der aktualisierten zweiten Orientierungskomponenten und der aktualisierten dritten Orientierungskomponenten,
Schätzen (A230) anfänglicher Translationskomponenten für die erste Transformation (TAB) auf der Grundlage der aktualisierten zweiten Translationskomponenten,
iteratives Bestimmen (A240) zumindest aktualisierter Orientierungskomponenten für die erste Transformation (TAB) und einer weiter aktualisierten zweiten Brennweite unter einer ersten Nebenbedingung, gemäß der ein erster Reprojektionsfehler für mindestens einen Reprojektionspunkt im ersten und zweiten Sichtfeld eine erste Bedingung für einen zulässigen Reprojektionsfehler erfüllt.

2. Verfahren nach Anspruch 1, wobei das Verfahren umfasst:
Erhalten (A110) eines Satzes von Maßen durch Empfangen als Benutzereingabe oder aus einem für die Kalibriervorrichtung (110) zugänglichen Speicher, wobei der Satz von Maßen mindestens fünf umfasst von:
das erste Maß (A'R),
das zweite Maß (A'L),
das dritte Maß (A'B'),
das vierte Maß (B'R),
das fünfte Maß (B'L) oder
das sechste Maß (RL),
wobei, wenn der Satz von Maßen von dem ersten, zweiten, dritten, vierten, fünften und sechsten Maß alle bis auf eines umfasst, das verbleibende Maß auf der Grundlage des Satzes von Maßen berechnet wird, und
Erhalten (A115) des siebten Maßes, des ersten Winkelmaßes (vA), des zweiten Winkelmaßes (vB) und des dritten Winkelmaßes (vC) durch Empfangen als Benutzereingabe oder aus einem für die Kalibriervorrichtung (110) zugänglichen Speicher.

3. Verfahren nach einem der vorstehenden Ansprüche, wobei das Verfahren ein Erhalten (A120) der Objektentfernung (D) durch Empfangen als Benutzereingabe oder aus einem für die Kalibriervorrichtung (110) zugänglichen Speicher umfasst.

4. Verfahren nach einem der vorstehenden Ansprüche, wobei das iterative Bestimmen (A170) der aktualisierten Orientierungskomponenten der dritten Transformation (TAC) und der aktualisierten dritten Brennweite durch Lösen eines dritten mathematischen Gleichungssystems erfolgt, das von den Orientierungskomponenten und optional Translationskomponenten, der dritten Transformation (TAC) und der dritten Brennweite abhängt, wobei die dritte Nebenbedingung erfüllt wird.

5. Verfahren nach einem der vorstehenden Ansprüche, wobei das iterative Bestimmen (A210) der aktualisierten Orientierungs- und Translationskomponenten für die zweite Transformation (TBC) und der aktualisierten zweiten Brennweite durch Lösen eines zweiten mathematischen Gleichungssystems erfolgt, das von den Orientierungs- und Translationskomponenten der zweiten Transformation (TBC) sowie der zweiten Brennweite abhängt, wobei die zweite Nebenbedingung erfüllt wird.

6. Verfahren nach einem der vorstehenden Ansprüche, wobei das iterative Bestimmen (A240) der zumindest aktualisierten Orientierungskomponenten für die erste Transformation (TAB) und der weiter aktualisierten zweiten Brennweite durch Lösen eines ersten mathematischen Gleichungssystems erfolgt, das von den Orientierungs- und Translationskomponenten der ersten Transformation (TAB) sowie der zweiten Brennweite abhängt, wobei die erste Nebenbedingung erfüllt wird.

7. Verfahren nach einem der vorstehenden Ansprüche, wobei das Verfahren umfasst:
Empfangen (A310) eines Tracking-Datenstroms von der ersten Kamera (A), der sich auf ein verfolgtes Objekt (120) bezieht, wobei der Tracking-Datenstrom Informationen zum Erzeugen einer Verfolgungsspur enthält und eines oder mehrere der folgenden Elemente umfassen kann: von der ersten Kamera (A) aufgenommene Einzelbilder, Tracking-Daten, Blob-Informationen, Pfade oder Spuren,
Empfangen (A320) eines Videodatenstroms von der zweiten Kamera (B),
Rendern (A330) der Verfolgungsspur des verfolgten Objekts (120) in dem Videodatenstrom auf der Grundlage des Tracking-Datenstroms unter Verwendung der ersten Transformation (TAB).

8. Verfahren nach einem der vorstehenden Ansprüche, wobei das Verfahren umfasst:
Berechnen (130) jeweils einer zweidimensionalen Sensorgröße der ersten, zweiten und dritten Kamera auf der Grundlage der jeweiligen Bildauflösung der ersten, zweiten und dritten Kamera und/oder
Berechnen (135) jeweils eines Seitenverhältnisses der von der ersten, zweiten und dritten Kamera aufgenommenen Bilder auf der Grundlage der jeweiligen Bildauflösung der ersten, zweiten und dritten Kamera.

9. Verfahren nach einem der vorstehenden Ansprüche, wobei das Verfahren ein Erhalten (A125) der ersten Brennweite der ersten Kamera (A) durch Empfangen als Benutzereingabe oder aus einem für die Kalibriervorrichtung (110) zugänglichen Speicher umfasst.

10. Kalibriervorrichtung (110), die zum Bestimmen einer ersten Transformation (TAB) zwischen einem ersten Koordinatensystem einer ersten Kamera (A) und einem zweiten Koordinatensystem einer zweiten Kamera (B) konfiguriert ist, wobei die erste und die zweite Kamera (A, B) voneinander beabstandet und oberhalb einer Grundebene (G, xz-Ebene) angeordnet sind, wobei sich ein erstes Sichtfeld der ersten Kamera (A) zumindest teilweise mit einem zweiten Sichtfeld der zweiten Kamera (B) überschneidet, wobei eine dritte Kamera (C) ein drittes Sichtfeld aufweist, das sich teilweise mit dem ersten und dem zweiten Sichtfeld überschneidet, wobei die Position der dritten Kamera (C) und die Position der ersten Kamera (A) als näherungsweise gleich angenommen werden, wobei ein entferntes Objekt (P) im ersten, zweiten und dritten Sichtfeld vorhanden ist und einen Objektabstand (D) von einem Ort (AB) aufweist, der sich bei mindestens einer der ersten Kamera (A), der zweiten Kamera (B) und der dritten Kamera (C), vorzugsweise bei der ersten Kamera (A), befindet, wobei ein erster Marker (R) und ein zweiter Marker (L) auf der Grundebene (G) angeordnet sind und der erste und der zweite Marker (R, L) im zweiten und dritten Sichtfeld sichtbar sind, wobei eine zweite Transformation (TBC) eine Transformation zwischen dem zweiten Koordinatensystem der zweiten Kamera (B) und einem dritten Koordinatensystem der dritten Kamera (C) bezeichnet, wobei eine dritte Transformation (TAC) eine Transformation zwischen dem ersten Koordinatensystem der ersten Kamera (A) und dem dritten Koordinatensystem der dritten Kamera (C) bezeichnet, wobei die erste Kamera (A) eine erste Brennweite aufweist, wobei ein erstes Maß (A'R) einen ersten Abstand zwischen dem ersten Marker (R) und mindestens einer der ersten Kamera (A) und der dritten Kamera (C) angibt, der auf die Grundebene (G) projiziert ist, wobei ein zweites Maß (A'L) einen zweiten Abstand zwischen dem zweiten Marker (L) und mindestens einer der ersten Kamera (A) und der dritten Kamera (C) angibt, der auf die Grundebene (G) projiziert ist, wobei ein drittes Maß (A'B') einen dritten Abstand zwischen der zweiten Kamera (B) und mindestens einer der ersten Kamera (A) und der dritten Kamera (C) angibt, der auf die Grundebene (G) projiziert ist, wobei ein viertes Maß (B'R) einen vierten Abstand zwischen der zweiten Kamera (B) und dem ersten Marker (R) angibt, der auf die Grundebene (G) projiziert ist, wobei ein fünftes Maß (B'L) einen fünften Abstand zwischen der zweiten Kamera (B) und dem zweiten Marker (L) angibt, der auf die Grundebene (G) projiziert ist, wobei ein sechstes Maß (RL) einen sechsten Abstand zwischen dem ersten Marker (R) und dem zweiten Marker (L) angibt, der auf die Grundebene (G) projiziert ist, wobei ein siebtes Maß (hAC-B) einen siebten Abstand angibt, der einem Höhenunterschied zwischen der zweiten Kamera (B) und mindestens einer der ersten und dritten Kameras (A, C) entspricht, wobei ein erstes Winkelmaß (vA) einen Merkmalswinkel angibt, der in einer ersten Bildebene identifiziert ist und das erste Sichtfeld darstellt, wobei ein zweites Winkelmaß (vB) den Merkmalswinkel angibt, der in einer zweiten Bildebene identifiziert ist und das zweite Sichtfeld darstellt, wobei ein drittes Winkelmaß (vC) den Merkmalswinkel angibt, der in einer dritten Bildebene identifiziert ist und das dritte Sichtfeld darstellt, wobei die Kalibriervorrichtung (110) dazu konfiguriert ist:
eine dritte Brennweite der dritten Kamera (C) auf der Grundlage
des ersten Maßes (A'R),
des zweiten Maßes (A'L),
einer dritten Position des ersten Markers (R) in dem dritten Sichtfeld,
einer vierten Position des zweiten Markers (L) in dem dritten Sichtfeld,
des sechsten Maßes (RL) und
einer Bildauflösung der dritten Kamera (C)
zu schätzen,
anfängliche Orientierungskomponenten (r3) der dritten Transformation (TAC) auf der Grundlage
der Position des entfernten Objekts (P) in der ersten Kamera (A),
einer Bildauflösung der ersten Kamera (A),
der ersten Brennweite,
der Position des entfernten Objekts (P) in der dritten Kamera (C),
der Bildauflösung der dritten Kamera (C),
der dritten Brennweite,
der Objektentfernung (D),
des ersten Winkelmaßes (vA) und
des dritten Winkelmaßes (vC)
zu schätzen,
anfängliche Translationskomponenten (t3) der dritten Transformation (TAC) als null zu schätzen,
aktualisierte Orientierungskomponenten der dritten Transformation (TAC) und eine aktualisierte dritte Brennweite unter einer dritten Nebenbedingung, gemäß der ein dritter Reprojektionsfehler für mindestens einen Reprojektionspunkt im ersten und dritten Sichtfeld eine dritte Bedingung für einen zulässigen Reprojektionsfehler erfüllt, iterativ zu bestimmen,
eine zweite Brennweite der zweiten Kamera (B) auf der Grundlage
des vierten Maßes (B'R),
des fünften Maßes (B'L),
einer ersten Position des ersten Markers (R) in dem zweiten Sichtfeld,
einer zweiten Position des zweiten Markers (L) in dem zweiten Sichtfeld,
des sechsten Maßes (RL) und
einer Bildauflösung der zweiten Kamera (B)
zu schätzen,
anfängliche Orientierungskomponenten (r2) der zweiten Transformation (TBC) auf der Grundlage
der Position des entfernten Objekts in der zweiten Kamera (B),
einer Bildauflösung der zweiten Kamera (B),
der zweiten Brennweite,
der Position des entfernten Objekts in der dritten Kamera (C),
einer Bildauflösung der dritten Kamera (C),
der dritten Brennweite,
der Objektentfernung (D),
des dritten Maßes (A'B'),
des siebten Maßes (hAC-B),
des zweiten Winkelmaßes (vB) und
des dritten Winkelmaßes (vC)
zu schätzen,
anfängliche zweite Translationskomponenten (t2) der zweiten Transformation (TBC) auf der Grundlage
des dritten Maßes (A'B'), das den Radius eines imaginären Kreises definiert, dessen Mittelpunkt bei der Kamera B liegt,
des zweiten Maßes (A'L), das den Radius eines imaginären Kreises definiert, dessen Mittelpunkt bei dem zweiten Marker L liegt,
des fünften Maßes (B'L) und
des siebten Maßes (hAC-B)
zu schätzen,
aktualisierte Orientierungs- und Translationskomponenten für die zweite Transformation (TBC) sowie eine aktualisierte zweite Brennweite unter einer zweiten Nebenbedingung, gemäß der ein zweiter Reprojektionsfehler für mindestens einen Reprojektionspunkt im zweiten und dritten Sichtfeld eine zweite Bedingung für einen zulässigen Reprojektionsfehler erfüllt, iterativ zu bestimmen,
anfängliche erste Orientierungskomponenten für die erste Transformation (TAB) auf der Grundlage der aktualisierten zweiten Orientierungskomponenten und der aktualisierten dritten Orientierungskomponenten zu schätzen,
anfängliche Translationskomponenten für die erste Transformation (TAB) auf der Grundlage der aktualisierten zweiten Translationskomponenten zu schätzen,
zumindest aktualisierte Orientierungskomponenten für die erste Transformation (TAB) und eine weiter aktualisierte zweite Brennweite unter einer ersten Nebenbedingung, gemäß der ein erster Reprojektionsfehler für mindestens einen Reprojektionspunkt im ersten und zweiten Sichtfeld eine erste Bedingung für einen zulässigen Reprojektionsfehler erfüllt, iterativ zu bestimmen.

11. Computerprogramm (903), umfassend computerlesbare Codeeinheiten, die bei Ausführung auf einer Kalibriervorrichtung (110) die Kalibriervorrichtung (110) veranlassen, das Verfahren nach einem der Ansprüche 1 bis 9 durchzuführen.

12. Träger (905), der das Computerprogramm nach dem vorstehenden Anspruch umfasst, wobei der Träger (905) ein elektronisches Signal, ein optisches Signal, ein Funksignal oder ein computerlesbares Medium ist.

13. System (100), umfassend eine erste Kamera (A), eine zweite Kamera (B), eine dritte Kamera (C) und eine Kalibriervorrichtung (110) nach Anspruch 10.

14. System (100) nach dem vorstehenden Anspruch, wobei die erste Kamera (A) ein Tracking-Sensor ist und/oder die zweite Kamera (B) eine Broadcast-Kamera ist und/oder die dritte Kamera (C) eine Weitwinkel-Standbildkamera ist.

## Revendications

1. Procédé mis en œuvre par un appareil d'étalonnage (110) destiné à déterminer une première transformation (TAB) entre un premier système de coordonnées d'une première caméra (A) et un deuxième système de coordonnées d'une deuxième caméra (B), dans lequel les première et deuxième caméras (A, B) sont espacées l'une de l'autre et situées au-dessus d'un plan de référence au sol (G, plan xz), dans lequel un premier champ de vision de la première caméra (A) chevauche au moins partiellement un deuxième champ de vision de la deuxième caméra (B), dans lequel un troisième champ de vision d'une troisième caméra (C) chevauche partiellement les premier et deuxième champs de vision, dans lequel on estime que la position de la troisième caméra (C) et la position de la première caméra (A) sont approximativement égales, dans lequel un objet distant (P) est présent dans les premier, deuxième et troisième champs de vision et se situe à une distance d'objet (D) par rapport à un emplacement (AB) au niveau d'au moins une parmi la première caméra (A), la deuxième caméra (B) et la troisième caméra (C) dans lequel un premier marqueur (R) et un deuxième marqueur (L) se situent au niveau du plan de référence au sol (G), et les premier et deuxième marqueurs (R, L) sont visibles dans les deuxième et troisième champs de vision, dans lequel une deuxième transformation (TBC) se réfère à la transformation entre le deuxième système de coordonnées de la deuxième caméra (B) et un troisième système de coordonnées de la troisième caméra (C), dans lequel une troisième transformation (TAC) se réfère à la transformation entre le premier système de coordonnées de la première caméra (A) et le troisième système de coordonnées de la troisième caméra (C), dans lequel la première caméra (A) a une première longueur focale, dans lequel une première mesure (A'R) indique une première distance projetée sur le plan de référence au sol (G) entre le premier marqueur (R) et au moins une parmi la première caméra (A) et la troisième caméra (C), dans lequel une deuxième mesure (A'L) indique une deuxième distance projetée sur le plan de référence au sol (G) entre le deuxième marqueur (L) et au moins une parmi la première caméra (A) et la troisième caméra (C), dans lequel une troisième mesure (A'B') indique une troisième distance projetée sur le plan de référence au sol (G) entre la deuxième caméra (B) et au moins une parmi la première caméra (A) et la troisième caméra (C), dans lequel une quatrième mesure (B'R) indique une quatrième distance projetée sur le plan de référence au sol (G) entre la deuxième caméra (B) et le premier marqueur (R), dans lequel une cinquième mesure (B'L) indique une cinquième distance projetée sur le plan de référence au sol (G) entre la deuxième caméra (B) et le deuxième marqueur (L), dans lequel une sixième mesure (RL) indique une sixième distance projetée sur le plan de référence au sol (G) entre le premier marqueur (R) et le deuxième marqueur (L), dans lequel une septième mesure (hAC-B) indique une septième distance indiquant une différence de hauteur entre la deuxième caméra (B) et au moins une des première et troisième caméras (A, C), dans lequel une première mesure d'angle (vA) indique un angle de caractéristique identifié dans un premier plan d'image représentant le premier champ de vision, dans lequel une deuxième mesure d'angle (vB) indique l'angle de caractéristique identifié dans un deuxième plan d'image représentant le deuxième champ de vision, dans lequel une troisième mesure d'angle (vC) indique l'angle de caractéristique identifié dans un troisième plan d'image représentant le troisième champ de vision, dans lequel le procédé comprend les étapes suivantes :
estimer (A140) une troisième longueur focale de la troisième caméra (C) sur la base de
la première mesure (A'R),
la deuxième mesure (A'L),
une troisième position du premier marqueur (R) dans le troisième champ de vision,
une quatrième position du deuxième marqueur (L) dans le troisième champ de vision,
la sixième mesure (RL), et
une résolution d'image de la troisième caméra (C),
estimer (A150) des composantes d'orientation initiales (r3) de la troisième transformation (TAC) sur la base de
la position de l'objet distant (P) dans la première caméra (A),
une résolution d'image de la première caméra (A),
la première longueur focale,
la position de l'objet distant (P) dans la troisième caméra (C),
la résolution d'image de la troisième caméra (C),
la troisième longueur focale,
la distance d'objet (D),
la première mesure d'angle (vA), et
la troisième mesure d'angle (vC),
estimer (A160) des composantes de translation initiales (t3) de la troisième transformation (TAC) comme étant égales à zéro,
déterminer de manière itérative (A170) des composantes d'orientation mises à jour de la troisième transformation (TAC) et une troisième longueur focale mise à jour sous une troisième contrainte selon laquelle une troisième erreur de reprojection pour au moins un point de reprojection dans les premier et troisième champs de vision satisfait à une troisième condition concernant une erreur de reprojection admissible,
estimer (A180) une deuxième longueur focale de la deuxième caméra (B) sur la base de
la quatrième mesure (B'R),
la cinquième mesure (B'L),
une première position du premier marqueur (R) dans le deuxième champ de vision,
une deuxième position du deuxième marqueur (L) dans le deuxième champ de vision,
la sixième mesure (RL), et
une résolution d'image de la deuxième caméra (B),
estimer (A190) des composantes d'orientation initiales (r2) de la deuxième transformation (TBC) sur la base de
la position de l'objet distant dans la deuxième caméra (B),
une résolution d'image de la deuxième caméra (B),
la deuxième longueur focale, et
la position de l'objet distant dans la troisième caméra (C),
une résolution d'image de la troisième caméra (C),
la troisième longueur focale,
la distance d'objet (D),
la troisième mesure (A'B'),
la septième mesure (hAC-B),
la deuxième mesure d'angle (vB), et
la troisième mesure d'angle (vC),
estimer (A200) des deuxièmes composantes de translation initiales (t2) de la deuxième transformation (TBC) sur la base de
la troisième mesure (A'B') définissant un rayon d'un cercle imaginaire centré au niveau de la caméra B,
la deuxième mesure (A'L) définissant un rayon d'un cercle imaginaire centré au niveau du deuxième marqueur L,
la cinquième mesure (B'L), et
la septième mesure (hAC-B),
déterminer de manière itérative (A210) des composantes d'orientation et de translation mises à jour pour la deuxième transformation (TBC) et une deuxième longueur focale mise à jour sous une deuxième contrainte selon laquelle une deuxième erreur de reprojection pour au moins un point de reprojection dans les deuxième et troisième champs de vision satisfait à une deuxième condition concernant une erreur de reprojection admissible,
estimer (A220) des premières composantes d'orientation initiales pour la première transformation (TAB) sur la base des deuxièmes composantes d'orientation mises à jour et des troisièmes composantes d'orientation mises à jour,
estimer (A230) des composantes de translation initiales pour la première transformation (TAB) sur la base des deuxièmes composantes de translation mises à jour,
déterminer de manière itérative (A240) au moins des composantes d'orientation mises à jour pour la première transformation (TAB) et une deuxième longueur focale mise à jour supplémentaire sous une première contrainte selon laquelle une première erreur de reprojection pour au moins un point de reprojection dans les premier et deuxième champs de vision satisfait à une première condition concernant une erreur de reprojection admissible.

2. Procédé selon la revendication 1, dans lequel le procédé comprend les étapes suivantes :
obtenir (A110) un ensemble de mesures sous forme d'entrée utilisateur reçue ou à partir d'une mémoire accessible par l'appareil d'étalonnage (110), l'ensemble de mesures comprenant au moins cinq parmi :
la première mesure (A'R),
la deuxième mesure (A'L),
la troisième mesure (A'B'),
la quatrième mesure (B'R),
la cinquième mesure (B'L), ou
la sixième mesure (RL),
dans lequel, lorsque l'ensemble de mesures comprend toutes les mesures des première, deuxième, troisième, quatrième, cinquième et sixième mesures sauf une, cette mesure est calculée sur la base de l'ensemble de mesures, et
obtenir (A115) la septième mesure, la première mesure d'angle (vA), la deuxième mesure d'angle (vB) et la troisième mesure d'angle (vC) sous forme d'entrée utilisateur reçue ou à partir d'une mémoire accessible par l'appareil d'étalonnage (110).

3. Procédé selon l'une quelconque des revendications précédentes, dans lequel le procédé comprend l'obtention (A120) de la distance d'objet (D) sous forme d'entrée utilisateur reçue ou à partir d'une mémoire accessible par l'appareil d'étalonnage (110).

4. Procédé selon l'une quelconque des revendications précédentes, dans lequel la détermination de manière itérative (A170) des composantes d'orientation mises à jour de la troisième transformation (TAC) et de la troisième longueur focale mise à jour est effectuée en résolvant un troisième système d'équations mathématiques dépendant des composantes d'orientation et facultativement des composantes de translation de la troisième transformation (TAC) et de la troisième longueur focale, tout en satisfaisant à la troisième contrainte.

5. Procédé selon l'une quelconque des revendications précédentes, dans lequel la détermination de manière itérative (A210) des composantes d'orientation et de translation mises à jour de la deuxième transformation (TBC) et de la deuxième longueur focale mise à jour est effectuée en résolvant un deuxième système d'équations mathématiques dépendant des composantes d'orientation et de translation de la deuxième transformation (TBC) et de la deuxième longueur focale, tout en satisfaisant à la deuxième contrainte.

6. Procédé selon l'une quelconque des revendications précédentes, dans lequel la détermination de manière itérative (A240) desdites au moins des composantes d'orientation mises à jour de la première transformation (TAB) et de la deuxième longueur focale mise à jour supplémentaire est effectuée en résolvant un premier système d'équations mathématiques dépendant des composantes d'orientation et de translation de la première transformation (TAB) et de la deuxième longueur focale, tout en satisfaisant à la première contrainte.

7. Procédé selon l'une quelconque des revendications précédentes, dans lequel le procédé comprend les étapes suivantes :
recevoir (A310) de la première caméra (A) un flux de suivi relatif à un objet suivi (120), dans lequel le flux de suivi comporte des informations permettant de générer une trace de suivi, dans lequel le flux de suivi peut comporter une ou plusieurs trames d'images capturées par la première caméra (A), des données de suivi, des informations de nuées, des chemins et/ou des pistes,
recevoir (A320) un flux vidéo de la deuxième caméra (B),
rendre (A330) la trace de suivi relative à l'objet suivi (120) dans le flux vidéo sur la base du flux de suivi tout en utilisant la première transformation (TAB).

8. Procédé selon l'une quelconque des revendications précédentes, dans lequel le procédé comprend les étapes suivantes
calculer (130) une taille de capteur bidimensionnelle des première, deuxième et troisième caméras respectivement, sur la base de la résolution d'image des première, deuxième et troisième caméras respectivement, et/ou
calculer (135) un rapport d'aspect des images capturées par les première, deuxième et troisième caméras respectivement, sur la base de la résolution d'image des première, deuxième et troisième caméras respectivement.

9. Procédé selon l'une quelconque des revendications précédentes, dans lequel le procédé comprend l'obtention (A125) de la première longueur focale de la première caméra (A) sous forme d'entrée utilisateur reçue ou à partir d'une mémoire accessible par l'appareil d'étalonnage (110).

10. Appareil d'étalonnage (110) configuré pour déterminer une première transformation (TAB) entre un premier système de coordonnées d'une première caméra (A) et un deuxième système de coordonnées d'une deuxième caméra (B), dans lequel les première et deuxième caméras (A, B) sont espacées l'une de l'autre et situées au-dessus d'un plan de référence au sol (G, plan xz), dans lequel un premier champ de vision de la première caméra (A) chevauche au moins partiellement un deuxième champ de vision de la deuxième caméra (B), dans lequel un troisième champ de vision d'une troisième caméra (C) chevauche partiellement les premier et deuxième champs de vision, dans lequel on estime que la position de la troisième caméra (C) et la position de la première caméra (A) sont approximativement égales, dans lequel un objet distant (P) est présent dans les premier, deuxième et troisième champs de vision et se situe à une distance d'objet (D) par rapport à un emplacement (AB) au niveau d'au moins une parmi la première caméra (A), la deuxième caméra (B) et la troisième caméra (C), de préférence au niveau de la première caméra (A), dans lequel un premier marqueur (R) et un deuxième marqueur (L) se situent au niveau du plan de référence au sol (G), et les premier et deuxième marqueurs (R, L) sont visibles dans les deuxième et troisième champs de vision, dans lequel une deuxième transformation (TBC) se réfère à la transformation entre le deuxième système de coordonnées de la deuxième caméra (B) et un troisième système de coordonnées de la troisième caméra (C), dans lequel une troisième transformation (TAC) se réfère à la transformation entre le premier système de coordonnées de la première caméra (A) et le troisième système de coordonnées de la troisième caméra (C), dans lequel la première caméra (A) a une première longueur focale, dans lequel une première mesure (A'R) indique une première distance projetée sur le plan de référence au sol (G) entre le premier marqueur (R) et au moins une parmi la première caméra (A) et la troisième caméra (C), dans lequel une deuxième mesure (A'L) indique une deuxième distance projetée sur le plan de référence au sol (G) entre le deuxième marqueur (L) et au moins une parmi la première caméra (A) et la troisième caméra (C), dans lequel une troisième mesure (A'B') indique une troisième distance projetée sur le plan de référence au sol (G) entre la deuxième caméra (B) et au moins une parmi la première caméra (A) et la troisième caméra (C), dans lequel une quatrième mesure (B'R) indique une quatrième distance projetée sur le plan de référence au sol (G) entre la deuxième caméra (B) et le premier marqueur (R), dans lequel une cinquième mesure (B'L) indique une cinquième distance projetée sur le plan de référence au sol (G) entre la deuxième caméra (B) et le deuxième marqueur (L), dans lequel une sixième mesure (RL) indique une sixième distance projetée sur le plan de référence au sol (G) entre le premier marqueur (R) et le deuxième marqueur (L), dans lequel une septième mesure (hAC-B) indique une septième distance indiquant une différence de hauteur entre la deuxième caméra (B) et au moins une des première et troisième caméras (A, C), dans lequel une première mesure d'angle (vA) indique un angle de caractéristique identifié dans un premier plan d'image représentant le premier champ de vision, dans lequel une deuxième mesure d'angle (vB) indique l'angle de caractéristique identifié dans un deuxième plan d'image représentant le deuxième champ de vision, dans lequel une troisième mesure d'angle (vC) indique l'angle de caractéristique identifié dans un troisième plan d'image représentant le troisième champ de vision, dans lequel l'appareil d'étalonnage (110) est configuré pour :
estimer une troisième longueur focale de la troisième caméra (C) sur la base de
la première mesure (A'R),
la deuxième mesure (A'L),
une troisième position du premier marqueur (R) dans le troisième champ de vision,
une quatrième position du deuxième marqueur (L) dans le troisième champ de vision,
la sixième mesure (RL), et
une résolution d'image de la troisième caméra (C),
estimer des composantes d'orientation initiales (r3) de la troisième transformation (TAC) sur la base de
la position de l'objet distant (P) dans la première caméra (A),
une résolution d'image de la première caméra (A),
la première longueur focale,
la position de l'objet distant (P) dans la troisième caméra (C),
la résolution d'image de la troisième caméra (C),
la troisième longueur focale,
la distance d'objet (D),
la première mesure d'angle (vA), et
la troisième mesure d'angle (vC),
estimer des composantes de translation initiales (t3) de la troisième transformation (TAC) comme étant égales à zéro,
déterminer de manière itérative des composantes d'orientation mises à jour de la troisième transformation (TAC) et une troisième longueur focale mise à jour sous une troisième contrainte selon laquelle une troisième erreur de reprojection pour au moins un point de reprojection dans les premier et troisième champs de vision satisfait à une troisième condition concernant une erreur de reprojection admissible,
estimer une deuxième longueur focale de la deuxième caméra (B) sur la base de
la quatrième mesure (B'R),
la cinquième mesure (B'L),
une première position du premier marqueur (R) dans le deuxième champ de vision,
une deuxième position du deuxième marqueur (L) dans le deuxième champ de vision,
la sixième mesure (RL), et
une résolution d'image de la deuxième caméra (B),
estimer des composantes d'orientation initiales (r2) de la deuxième transformation (TBC) sur la base de
la position de l'objet distant dans la deuxième caméra (B),
une résolution d'image de la deuxième caméra (B),
la deuxième longueur focale, et
la position de l'objet distant dans la troisième caméra (C),
une résolution d'image de la troisième caméra (C),
la troisième longueur focale,
la distance d'objet (D),
la troisième mesure (A'B'),
la septième mesure (hAC-B),
la deuxième mesure d'angle (vB), et
la troisième mesure d'angle (vC),
estimer des deuxièmes composantes de translation initiales (t2) de la deuxième transformation (TBC) sur la base de
la troisième mesure (A'B') définissant un rayon d'un cercle imaginaire centré au niveau de la caméra B,
la deuxième mesure (A'L) définissant un rayon d'un cercle imaginaire centré au niveau du deuxième marqueur L,
la cinquième mesure (B'L), et
la septième mesure (hAC-B),
déterminer de manière itérative des composantes d'orientation et de translation mises à jour pour la deuxième transformation (TBC) et une deuxième longueur focale mise à jour sous une deuxième contrainte selon laquelle une deuxième erreur de reprojection pour au moins un point de reprojection dans les deuxième et troisième champs de vision satisfait à une deuxième condition concernant une erreur de reprojection admissible,
estimer des premières composantes d'orientation initiales pour la première transformation (TAB) sur la base des deuxièmes composantes d'orientation mises à jour et des troisièmes composantes d'orientation mises à jour,
estimer des composantes de translation initiales pour la première transformation (TAB) sur la base des deuxièmes composantes de translation mises à jour,
déterminer de manière itérative au moins des composantes d'orientation mises à jour pour la première transformation (TAB) et une deuxième longueur focale mise à jour supplémentaire sous une première contrainte selon laquelle une première erreur de reprojection pour au moins un point de reprojection dans les premier et deuxième champs de vision satisfait à une première condition concernant une erreur de reprojection admissible.

11. Programme informatique (903) comprenant des unités de code lisibles par ordinateur qui, lorsqu'elles sont exécutées sur un appareil d'étalonnage (110) amènent l'appareil d'étalonnage (110) à mettre en œuvre le procédé selon l'une quelconque des revendications 1 à 9.

12. Support (905) comprenant le programme informatique selon la revendication précédente, dans lequel le support (905) est un parmi un signal électronique, un signal optique, un signal radio et un support lisible par ordinateur.

13. Système (100) comprenant une première caméra (A), une deuxième caméra (B), une troisième caméra (C) et un appareil d'étalonnage (110) selon la revendication 10.

14. Système (100) selon la revendication précédente, dans lequel la première caméra (A) est un capteur de suivi et/ou la deuxième caméra (B) est une caméra de diffusion et/ou la troisième caméra (C) est une caméra grand angle d'images fixes.
